# EUROPÄISCHE PATENTSCHRIFT

(11) **EP 4 196 326 B1**
(45) Veröffentlichungstag und Bekanntmachung des Hinweises auf die Patenterteilung: **05.03.2025**
(21) Anmeldenummer: 21765597.6
(22) Anmeldetag: 12.08.2021
(51) Int. Cl.: B28B 1/00, B28B 5/04, B28B 7/18, B28B 7/46, B28B 19/00, B28B 23/02, B33Y 10/00, B33Y 40/00, B33Y 30/00, B33Y 80/00

(54) **VERFAHREN ZUM HERSTELLEN EINES 3D-GEDRUCKTEN FERTIGTEILS**
METHOD FOR PRODUCING A PREFABRICATED 3D-PRINTED PART
PROCÉDÉ POUR PRODUIRE UNE PIÈCE PRÉFABRIQUÉE PAR IMPRESSION 3D

(30) Priorität: 13.08.2020 AT 506782020
(43) Veröffentlichungstag der Anmeldung: 21.06.2023
(73) Patentinhaber: Progress Maschinen & Automation AG, 39042 Brixen (IT)
(72) Erfinder: WOHLGEMUTH, Kurt, 39058 Sarthein (IT); ENDERES, Karl, 39042 Brixen (IT)
(74) Vertreter: Torggler & Hofmann Patentanwälte - Innsbruck
(86) Internationale Anmeldenummer: PCT/EP2021/072530
(87) Internationale Veröffentlichungsnummer: WO 2022/034186

(56) Entgegenhaltungen:
- EP-A1- 3 335 857
- EP-A1- 3 335 857
- EP-A2- 2 119 541
- EP-A2- 2 119 541
- WO-A1-2019/197088
- WO-A1-2019/197088
- CN-A- 109 366 684
- CN-A- 109 366 684
- DE-A1- 102014 011 420
- DE-A1- 102014 011 420
- DE-A1- 3 714 581
- DE-A1- 3 714 581
- GB-A- 2 509 757
- GB-A- 2 509 757
- US-A1- 2017 182 711
- US-A1- 2020 040 566
- US-A1- 2020 040 566
- US-B2- 10 632 732
- US-B2- 10 632 732

## Beschreibung

Die Erfindung betrifft ein Verfahren zum Herstellen eines 3D-gedruckten Fertigteils, vorzugsweise Betonfertigbauelements, für die Bauindustrie, umfassend die folgenden Verfahrensschritte: es wird in einem ersten Verfahrensschritt wenigstens eine Schicht wenigstens eines partikelförmigen Zuschlagstoffs auf einer Produktionspalette mittels wenigstens einer Schichtablagevorrichtung abgelegt, und es wird in einem zweiten Verfahrensschritt eine vorbestimmte Dosis wenigstens eines Bindemittels oder wenigstens eines Wasser-Bindemittel-Gemischs an wenigstens einem örtlich vorbestimmten Bereich der wenigstens einen Schicht des wenigstens einen Zuschlagstoffs mittels wenigstens eines Druckkopfs abgegeben.

Aus dem Stand der Technik sind Verfahren zum Herstellen eines 3D-gedruckten Fertigteils bekannt. So ist ein Verfahren bekannt, das als Selective Cement Activation (SCA) bezeichnet wird. Dabei wird ein Grundmaterial mit einer ersten Binderkomponente vermischt und pulverförmig aufgetragen. Anschließend wird eine zweite Binderkomponente in flüssiger Form an den örtlich vorbestimmten Bereichen aufgetragen, wobei durch eine Reaktion der beiden Binderkomponenten eine Verfestigung des Grundmaterials erfolgt. Ein weiteres bekanntes Verfahren wird als Selective Paste Intrusion (SPI) bezeichnet. Dabei kommt ein Grundmaterial, wie z.B. Sand, Ziegelsplitt, Liapor oder Blähton, zum Einsatz, welches aber nicht mit einem Binder vermischt wird. Eine Verfestigung erfolgt in diesem Fall durch die Auftragung eines Wasser-Bindemittel-Gemischs.

Der Nachteil dieser Verfahren besteht darin, dass die hiermit herstellbaren Fertigteile eine geringe Stabilität aufweisen, die in der Bauindustrie in den wenigstens Fällen ausreichend ist.

Aus dem Stand der Technik ist weiterhin ein Verfahren bekannt, dass als "contour crafting" bezeichnet wird. Dabei gibt es Ansätze, die Stabilität der damit gefertigten Bauteile durch Verstärkungskabel zu erhöhen. Allerdings konnte experimentell anhand von Ausziehtests und ergänzend durchgeführten visuellen und mikroskopischen Beobachtungen festgestellt werden, dass chemische Wechselwirkungen zwischen dem Mörtel und den Verstärkungskabeln die Verbindungsqualität verschlechtern. Weiterhin ist die Stabilität der mittels contour crafting hergestellten Bauteile, in welche Verstärkungskabel eingelagert sind, im Allgemeinen geringer als die Stabilität gegossener Betonfertigteile. Dies ist wahrscheinlich auf die mangelnde Verdichtung sowie das Fließen des Mörtels um die Verstärkungskabel herum zurückzuführen, wodurch Hohlräume unter den Kabeln entstehen. Außerdem nimmt die Stabilität mit zunehmender Länge der eingebetteten Verstärkungskabel ab.

Weitere Verfahren zum Herstellen von 3D-gedruckten Fertigteilen sind aus den Schriften WO 2019/197088 A1, GB 2 509 757 A und EP 3 335 857 A1 bekannt. EP 3 335 857 A1 offenbart ferner ein Verfahren zum Herstellen eines 3D-gedruckten Fertigteils nach dem Oberbegriff des Anspruchs 1.

Die Aufgabe der vorliegenden Erfindung besteht darin, diese Nachteile zumindest teilweise zu beheben und ein gegenüber dem Stand der Technik verbessertes Verfahren zum Herstellen eines 3D-gedruckten Fertigteils für die Bauindustrie anzugeben, wobei die mittels des Verfahrens herstellbaren Fertigteile insbesondere eine ausreichend hohe Stabilität aufweisen. Es soll auch eine Anlage zur Durchführung eines solchermaßen verbesserten Verfahrens angegeben werden.

Diese Aufgabe wird durch die Merkmale des Anspruchs 1 gelöst.

Beim erfindungsgemäßen Verfahren ist es also vorgesehen, dass in einem dritten Verfahrensschritt wenigstens eine Bewehrung mittels wenigstens einer Bewehrungsablagevorrichtung zumindest bereichsweise auf und/oder in zumindest dem wenigstens einen örtlich vorbestimmten Bereich, an welchem die vorbestimmte Dosis des wenigstens einen Bindemittels oder des wenigstens einen Wasser-Bindemittel-Gemischs im Zuge des zweiten Verfahrensschritts abgegeben wurde, angeordnet wird, wobei die Bewehrung im Zuge des dritten Verfahrensschrittes zumindest bereichsweise in den örtlich vorbestimmten Bereich der wenigstens einen Schicht des wenigstens eines partikelförmigen Zuschlagstoffs, in welchem die vorbestimmte Dosis des wenigstens einen Bindemittels oder des wenigstens einen Wasser-Bindemittel-Gemischs abgegeben wurde, versenkt wird, vorzugsweise durch Drücken, Rütteln und/oder Vibration.

Natürlich sind Bewehrungen an sich auf dem Gebiet der Herstellung von Betonfertigbauelementen bereits bekannt. Allerdings bestand auf dem Gebiet der bekannten Druckverfahren das Vorurteil, dass diese Druckverfahren nicht kompatibel mit solchen Bewehrungen sind.

Die vorliegende Erfindung bricht in radikaler Weise mit diesem Vorurteil. Es war in keiner Weise für einen Fachmann vorhersehbar, dass es möglich sein würde, im Zuge eines Druckprozesses klassische Bewehrungen in das zu druckende Fertigteil zu integrieren.

Die durch das erfindungsgemäße Verfahren herstellbaren Fertigteile weisen gegenüber den durch die bekannten Druckverfahren herstellbaren Fertigteilen nicht nur eine signifikant erhöhte Stabilität auf. Das erfindungsgemäße Verfahren weist auch eine Reihe von Vorteilen gegenüber Herstellungsverfahren auf, bei denen Nassbeton mit Hilfe von Schalelementen zu Betonfertigbauelementen verarbeitet wird:
- teure und aufwändige Stationen, wie Schalungsroboter, und die dazugehörigen Schalungsteile und Magnete können entfallen
- flächige Elemente, wie Wandelemente oder Deckenelemente, können passgenau und ohne Schalaufwand hergestellt werden
- Fensteraussparungen können ohne Schalungsaufwand realisiert werden
- es lassen sich beliebige Freiformen realisieren
- Nachschalarbeiten und die Verwendung von nicht recyclingbarem Material können vollständig entfallen
- Öffnungen und Schlitze, gedruckte "Rohre" und gedruckte "Dosen" für Elektro- und Sanitäreinrichtungen können direkt eingeplant werden ohne zusätzlichen Aufwand und den Einsatz von Kunststoffen
- gewichtsreduzierende Hohlräume können direkt gedruckt werden
- es ist kein zusätzliches Verdichten nötig, da die Auftragung des partikelförmigen Zuschlagstoffes schichtweise erfolgt
- es sind ein niedriger Wasser- und Zementfaktor möglich, was einen minimalen Verbrauch an Zement zur Folge hat
- die Produktion kann auf einer fahrbaren Produktionspalette erfolgen
- alternativ oder ergänzend dazu ist eine Produktion möglich, bei welcher mehrere Produktionspaletten in Serie bereitgestellt werden und der wenigstens eine Druckkopf und die wenigstens eine Schichtablagevorrichtung über die Produktionspaletten hinweg bewegt werden
- genauso gut ist die Produktion auf einer langen Bahn möglich, wobei auch in diesem Fall der wenigstens eine Druckkopf und die wenigstens eine Schichtablagevorrichtung über die Produktionspaletten hinweg bewegt werden
- es kann eine Produktion im Rahmen einer Umlaufanlage realisiert werden, wodurch Trockenregale, Abhubstationen mit und ohne Kippvorrichtung, Reinigungsstation, Einölstation aus dem Standardprogramm eines Umlauflieferanten und Standardleit- und Steuerungssysteme einer Umlaufanlage zur Verwendung kommen können
- der Automatisierungsgrad kann weiter gesteigert werden, und zwar vom Design bis zur Produktion
- die Planung eines Betonfertigbauelement gestaltet sich einfacher, da eine volldigitalisierte Planung für eine Losgröße 1 möglich ist
- aufwändige Arbeitsvorbereitungen entfallen
- es wird weniger Lagerplatz für Gebrauchsmaterialien benötigt

Was den Aspekt der Bewehrungen betrifft, zeichnet sich das erfindungsgemäße Verfahren gegenüber Herstellungsverfahren auf, bei denen Nassbeton mit Hilfe von Schalelementen zu Betonfertigbauelementen verarbeitet wird, durch die folgenden Vorteile aus:
- es sind keine Abstandhalter für die Bewehrung aus Kunststoff nötig
- ausstehende Bewehrung sind ohne Probleme möglich, wohingegen ausstehende Bewehrungen mittels Schalelementen, wenn überhaupt, nur mit einem sehr hohen Aufwand realisierbar sind
- Gitterträger, Verbindungsstäbe oder andere vertikale Bewehrungssysteme können in einfacher Weise eingedrückt werden

Das erfindungsgemäße Verfahren ist prinzipiell sowohl mit einem SCA als auch mit einem SPI Druckprozess kompatibel. Gemäß einer bevorzugten Ausführungsform kommt ein SPI Druckprozess zum Einsatz. Dieser weist gegenüber einem SCA Druckprozess eine Reihe von Vorteilen auf:
- das Pulverbett besteht nur aus partikelförmigen Zuschlagstoffen, wie z.B. Sand, Ziegelsplitt, Liapor, Blähton, welche in der Bauindustrie sein Jahrzehnten bekannt sind
- es können einfach verschiedene Materialien, wie z.B. Isoliermaterialien, verwendet werden
- das Grundmaterial wird nicht mit einem Binder vermischt, was zur Folge hat, das ein nicht gebundenes Material einfach wiederverwendet werden kann
- das Wasser-Bindemittel-Gemisch wird selektiv aufgetragen, nicht aktiviert
- kommt beim Wasser-Bindemittel-Gemisch Zement zum Einsatz, so können Reste einfach wieder gebrochen, gesiebt und verwendet werden
- das zur Verfügung stehende Druckvolumen muss nicht optimal gefüllt werden
- eine komplexe Entpackungsstation mit Absaugsystemen ist nicht nötig, da die Staubentwicklung signifikant geringer ist
- ein Auftragen einer oder mehrerer ersten und letzten Schichten des Wasser-Bindemittel-Gemischs eröffnet die Möglichkeit von glatten Flächen, die ansonsten nur mittels einer Schalung oder durch ein Abziehen, keinesfalls aber mittels eines SCA-Druckers, realisierbar sind
- die verwendbaren partikelförmigen Zuschlagstoffe sind resistent gegenüber Wasser
- die herstellbaren Bauteile weisen eine deutlich höhere Festigkeit auf
- es kann Portlandzement verwenden werden, sodass gültige Zulassungen und Normen genutzt werden können
- die Materialkosten sind geringer

Wenn ein SPI Druckprozess zum Einsatz kommt, so bietet es sich an, dass im Zuge des zweiten Verfahrensschritts wenigstens ein Wasser-Bindemittel-Gemisch, umfassend Wasser und wenigstens ein hydraulisches Bindemittel, insbesondere ein zementöses Bindemittel, abgegeben wird, und die Dosis des wenigstens einen abgegebenen Wasser-Bindemittel-Gemischs so groß ist, dass eine zumindest bereichsweise Verflüssigung am wenigstens einen örtlich vorbestimmten Bereich der wenigstens einen Schicht des wenigstens einen Zuschlagstoffs erzielt wird. Dadurch wird eine ideale Voraussetzung dafür geschaffen, dass die Bewehrung im Zuge des nachfolgenden dritten Verfahrensschrittes zumindest bereichsweise in den örtlich vorbestimmten Bereich der wenigstens einen Schicht versenkt wird, vorzugsweise durch Drücken, Rütteln und/oder Vibration.

Weitere vorteilhafte Ausführungsformen des Verfahrens sind in den abhängigen Ansprüche 2 bis 12 definiert.

Weitere Einzelheiten und Vorteile der Erfindung werden anhand der Figurenbeschreibung unter Bezugnahme auf die Zeichnungen im Folgenden näher erläutert. Darin zeigen:
- Fig. 1: ein erstes Ausführungsbeispiel einer Anlage zur Herstellung eines Betonfertigbauelements in einer schematisch dargestellten Ansicht,
- Fig. 2: ein erstes Ausführungsbeispiel einer 3D-Druckstation in einer schematisch dargestellten perspektivischen Ansicht,
- Fig. 3a, b: zwei weitere Ausführungsbeispiele einer 3D-Druckstation in einer schematisch dargestellten Draufsicht,
- Fig. 4a, b: zwei weitere Ausführungsbeispiele einer Anlage zur Herstellung eines Betonfertigbauelements in schematisch dargestellten Ansichten,
- Fig. 5: Schema eines weiteren Ausführungsbeispiels einer 3D-Druckstation mit den dazugehörigen Versorgungskreisläufen in einer schematisch dargestellten Ansicht,
- Fig. 6: Schema eines ersten Ausführungsbeispiels eines Druckbalkens in einer schematisch dargestellten Ansicht,
- Fig. 7a - d: ein erstes Ausführungsbeispiel eines Verfahrens zum Herstellen eines 3D-gedruckten Fertigteils für die Bauindustrie in schematisch dargestellten perspektivischen Ansichten,
- Fig. 8: ein weiteres Ausführungsbeispiel eines gedruckten Betonfertigbauelements in einer schematisch dargestellten perspektivischen Ansicht,
- Fig. 9a, b: weitere Ausführungsbeispiele eines gedruckten Betonfertigbauelements in schematisch dargestellten perspektivischen Ansichten,
- Fig. 10: ein weiteres Ausführungsbeispiel eines gedruckten Betonfertigbauelements in Form einer Doppelwand in einer schematisch dargestellten perspektivischen Ansicht,
- Fig. 11: ein weiteres Ausführungsbeispiel eines gedruckten Betonfertigbauelements mit einer Isolierschicht in einer schematisch dargestellten perspektivischen Ansicht,
- Fig. 12: ein weiteres Ausführungsbeispiel eines gedruckten Betonfertigbauelements mit gedruckten Aussparungen und Unterputzrohren für Elektroleitungen in einer schematisch dargestellten perspektivischen Ansicht,
- Fig. 13a, b: ein erstes Ausführungsbeispiel einer Produktionspalette in einer schematisch dargestellten Draufsicht,
- Fig. 14a, b: ein weiteres Ausführungsbeispiel einer Produktionspalette in einer schematisch dargestellten Draufsicht Teilfigur a und in einer Querschnittsansicht von der Seite Teilfigur b,
- Fig. 15: ein weiteres Ausführungsbeispiel einer Produktionspalette mit zwei bedruckten Bereichen in einer schematisch dargestellten Draufsicht,
- Fig. 16: ein weiteres Ausführungsbeispiel einer Produktionspalette und einer Schichtablagevorrichtung in einer schematisch dargestellten Querschnittsansicht von der Seite,
- Fig. 17: ein weiteres schematisch dargestelltes Ausführungsbeispiel eines Betonfertigbauelements in einer perspektivischen Ansicht,
- Fig. 18: ein Ausführungsbeispiel eines Druckbalkens und einer Schichtablagevorrichtung einer 3D-Druckstation in einer schematisch dargestellten Querschnittsansicht von der Seite,
- Fig. 19: ein schematisch dargestelltes Ausführungsbeispiel eines Druckkopfes zur gesteuerten Abgabe eines Wasser-Bindemittel-Gemischs in einer perspektivischen Ansicht,
- Fig. 20a: das Ausführungsbeispiel des in Fig. 19 dargestellten Druckkopfes, wobei ein erster Teilkörper eines Wechselkörpers ausgeblendet wurde,
- Fig. 20b: das Ausführungsbeispiel des in Fig. 19 dargestellten Druckkopfes, wobei ein erster und ein zweiter Teilkörper eines Wechselkörpers ausgeblendet wurden,

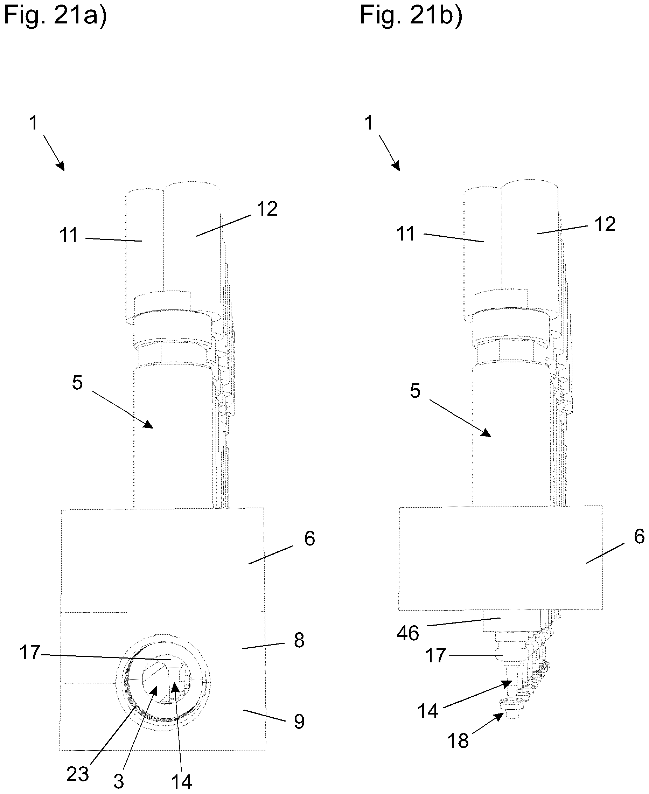

- Fig. 21a: das Ausführungsbeispiel des in Fig. 19 dargestellten Druckkopfes in einer perspektivischen Seitenansicht,
- Fig. 21b: das Ausführungsbeispiel des in Fig. 21a dargestellten Druckkopfes, wobei ein erster und ein zweiter Teilkörper eines Wechselkörpers ausgeblendet wurden,
- Fig. 22a: ein schematisch dargestelltes Ausführungsbeispiel einer Anordnung mit einem Wasser-Bindemittel-Gemisch, umfassend Wasser und wenigstens ein hydraulisches Bindemittel, insbesondere ein zementöses Bindemittel, und einem Druckkopf zur gesteuerten Abgabe des Wasser-Bindemittel-Gemischs in einer Querschnittsansicht entlang einer Querschnittsebene parallel zu einer Längsachse des Druckkopfes,
- Fig. 22b: das Ausführungsbeispiel des in Fig. 19 dargestellten Druckkopfes in einer Querschnittsansicht entlang einer Querschnittsebene senkrecht zu einer Längsachse des Druckkopfes,
- Fig. 23: ein schematisch dargestelltes Ausführungsbeispiel eines Ventils eines Druckkopfes zur gesteuerten Abgabe eines Wasser-Bindemittel-Gemischs in einer perspektivischen Ansicht,
- Fig. 24a, b: eine isolierte Darstellung einer Ventilstange des in Fig. 23 dargestellten Ventils und eines Düsenkörpers, wobei sich die Ventilstange und der Düsenkörper in der Teilfigur a kontaktieren und die Ventilstange und der Düsenkörper in der Teilfigur b voneinander beabstandet sind,
- Fig. 25: eine isolierte Darstellung einer Ventilstange des in Fig. 23 dargestellten Ventils, und
- Fig. 26: eine isolierte Darstellung eines Düsenkörpers des in Fig. 23 dargestellten Ventils.

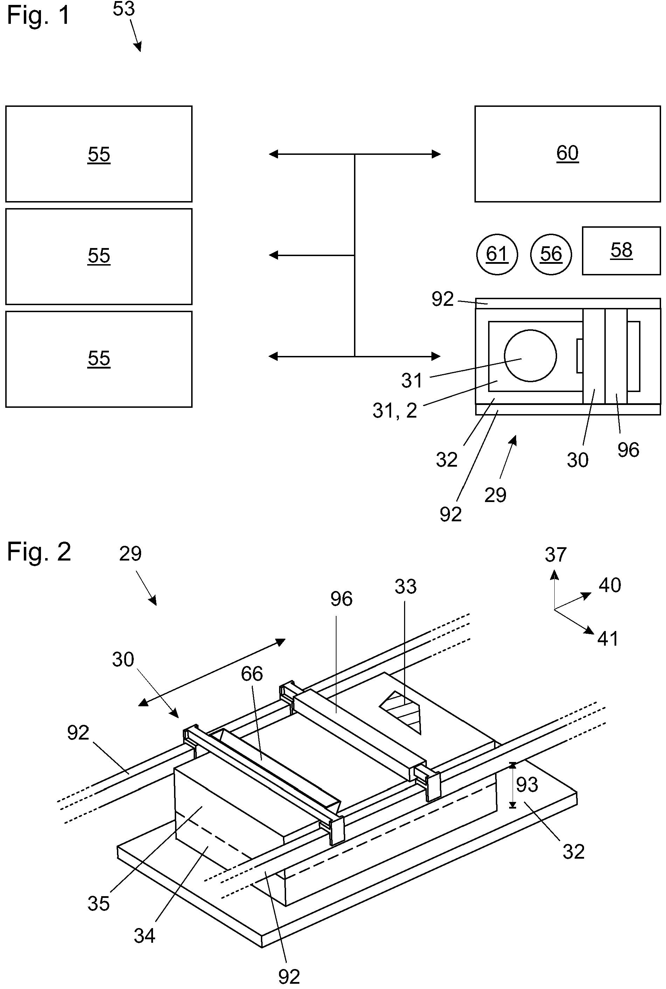

Die Figur 1 zeigt ein erstes Ausführungsbeispiel einer Anlage 53 zur Herstellung eines, vorzugsweise flächigen, Betonfertigbauelements 54, umfassend mehrere Stationen, die von wenigstens einer Produktionspalette 32 durchlaufen werden kann, wobei die Anlage 53 wenigstens ein Transportsystem, mit welchem die wenigstens eine Produktionspalette 32 durch die Anlage 53 transportierbar ist, umfasst. Die dabei zurück gelegten Transportwege zwischen den Stationen sind mit Pfeilen angedeutet.

Die Anlage 53 umfasst weiterhin wenigstens eine 3D-Druckstation 29 mit wenigstens einer Schichtablagevorrichtung 30 zur schichtweisen Ablage wenigstens eines partikelförmigen Zuschlagstoffs 31 auf der wenigstens einen Produktionspalette 32 und wenigstens einem Druckkopf 1 zur gesteuerten Abgabe wenigstens eines Wasser-Bindemittel-Gemischs 2, umfassend Wasser und wenigstens ein hydraulisches Bindemittel, insbesondere ein zementöses Bindemittel, an wenigstens einem örtlich vorbestimmten Bereich 33 der Produktionspalette 32 und/oder einer von der wenigstens einen Schichtablagevorrichtung 30 auf der Produktionspalette 32 abgelegten Schicht 34, 35, 36 des wenigstens einen Zuschlagstoffs 31.

Es ist wenigstens eine Speichervorrichtung 56 vorgesehen, in welcher der wenigstens eine partikelförmige Zuschlagstoff 31 speicherbar ist.

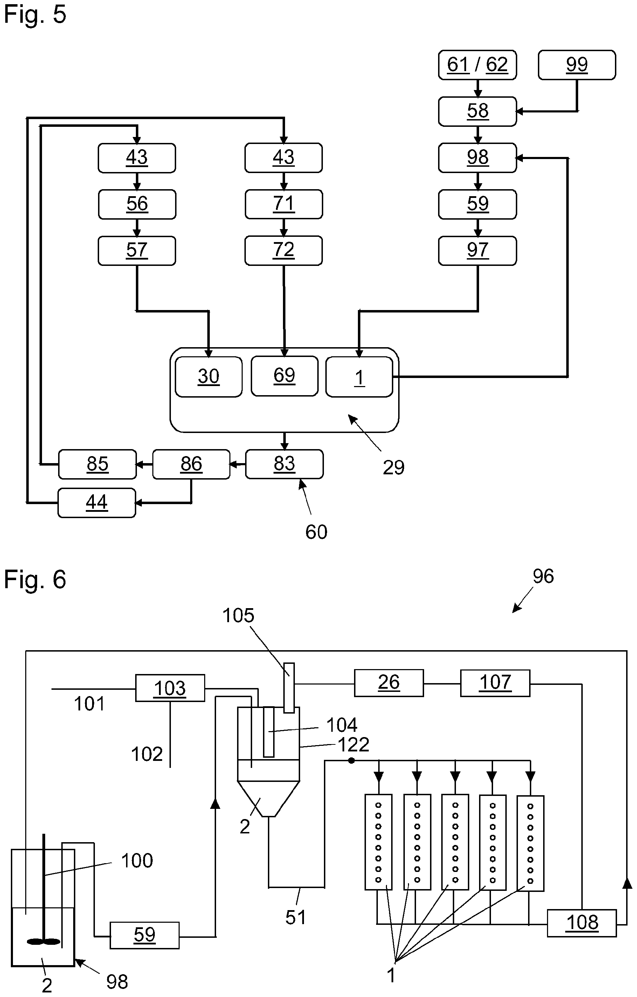

Wie aus der Fig. 5 hervorgeht, kann wenigstens eine Fördervorrichtung 57, mit welcher der wenigstens eine in der wenigstens einen Speichervorrichtung 56 gespeicherte partikelförmige Zuschlagstoff 31 zur wenigstens einen Schichtablagevorrichtung 30 der wenigstens eine 3D-Druckstation 29 beförderbar ist, vorgesehen sein.

Die Anlage 53 umfasst weiterhin wenigstens eine Mischvorrichtung 58, mit welcher das wenigstens eine Wasser-Bindemittel-Gemisch 2 bereitstellbar ist.

Wie aus der Fig. 5 hervorgeht, kann wenigstens eine Zuführvorrichtung 59 vorgesehen sein, mit welcher das wenigstens eine von der wenigstens einen Mischvorrichtung 58 bereitgestellte wenigstens eine Wasser-Bindemittel-Gemisch 2 dem wenigstens einen Druckkopf 1 der wenigstens einen 3D-Druckstation 29 zuführbar ist.

Die Anlage 53 umfasst wenigstens eine Entpackungsstation 60, in welcher ein in der wenigstens einen 3D-Druckstation 29 auf der wenigstens einen Produktionspalette 32 gedrucktes Betonfertigbauelement 54 von einem nichtgebundenen partikelförmigen Zuschlagstoff 31 entpackbar ist.

Und schließlich umfasst die Anlage 53 bei dem konkret dargestellten Ausführungsbeispiel Stellplätze 55 für die wenigstens eine Produktionspalette 32.

Ein wesentlicher Vorteil der Anlage 53 besteht darin, dass auf Schalungen und das damit zusammenhängende Schalungsmanagement, wie z.B. einen Schalungsroboter, eine Reinigungsstation oder ein Magazin, verzichtet werden kann. Es sind auch kein Betonverteiler und keine Glättvorrichtung erforderlich, welche in konventionellen Umlaufanlagen zur Herstellung von Betonfertigelementen zum Einsatz kommen.

Mittels einer solchen Anlage 53 kann ein Verfahren zur Herstellung eines, vorzugsweise flächigen, Betonfertigbauelements 54 wie folgt durchgeführt werden:
In der wenigstens einen 3D-Druckstation 29 wird in einem ersten Druckverfahrensschritt mittels der wenigstens einen Schichtablagevorrichtung 30 wenigstens eine Schicht 34, 35, 36 des wenigstens einen partikelförmigen Zuschlagstoffs 31 auf der Produktionspalette 32 abgelegt und in einem zweiten Druckverfahrensschritt mittels des wenigstens einen Druckkopfs 1 eine vorbestimmte Dosis 49 des wenigstens einen Wasser-Bindemittel-Gemischs 2 an wenigstens einem örtlich vorbestimmten Bereich 33 der wenigstens einen Schicht 34, 35, 36 des wenigstens einen Zuschlagstoffs 31 abgegeben, vorzugsweise wobei die beiden Druckverfahrensschritte wiederholt und/oder in umgekehrter Reigenfolge durchgeführt werden.

Es kann dabei vorgesehen sein, dass wenigstens eine Außenseite des Betonfertigbauelements 54 im Zuge der Druckverfahrensschritte mit einer vorbestimmten Oberflächenstruktur versehen wird. Das stellt einen großen Vorteil gegenüber konventionellen Herstellungsverfahren dar, da auf formgebende teure Gummimatrizen verzichtet werden kann. Stattdessen wird die vorbestimmte Oberflächenstruktur, also z.B. ein gewünschtes Muster, gedruckt.

Der wenigstens eine partikelförmige Zuschlagstoff 31 wird aus der wenigstens einen Speichervorrichtung 56 mittels der wenigstens einen Fördervorrichtung 57 zur wenigstens einen Schichtablagevorrichtung 30 der wenigstens eine 3D-Druckstation 29 befördert.

Das wenigstens eine Wasser-Bindemittel-Gemisch 2 wird in der wenigstens einen Mischvorrichtung 58 bereitgestellt und mittels der wenigstens einen Zuführvorrichtung 59 dem wenigstens einen Druckkopf 1 der wenigstens einen 3D-Druckstation 29 zugeführt.

Die wenigstens eine Produktionspalette 32 wird mittels des wenigstens einen Transportsystems von der wenigstens einen 3D-Druckstation 29 zur wenigstens einen Entpackungsstation 60 transportiert, und ein in der wenigstens einen 3D-Druckstation 29 auf der wenigstens einen Produktionspalette 32 gedrucktes Betonfertigbauelement 54 wird in der wenigstens einen Entpackungsstation 60 von einem nichtgebundenen partikelförmigen Zuschlagstoff 31 entpackt.

Weist die Anlage 53 wie im dargestellten Fall Stellplätze 55 für die wenigstens eine Produktionspalette 32 auf, wird die wenigstens eine Produktionspalette 32 in einem weiteren Verfahrensschritt mittels des wenigstens einen Transportsystems von dem wenigstens einen Stellplatz 55 zur wenigstens einen 3D-Druckstation 29 transportiert.

Die Figur 2 zeigt ein erstes Ausführungsbeispiel einer 3D-Druckstation 29.

Die 3D-Druckstation 29 weist wenigstens zwei Führungsschienen 92 auf, an denen die wenigstens eine Schichtablagevorrichtung 30 und/oder der wenigstens eine Druckkopf 1 in einer Ebene parallel zur wenigstens einen Produktionspalette 32 bewegbar ist.

Die 3D-Druckstation 29 kann wenigstens eine Höhenverstellvorrichtung umfassen, mit welcher ein Abstand 93 der wenigstens einen Schichtablagevorrichtung 30 oder eines Teils der wenigstens einen Schichtablagerungsvorrichtung 30 und/oder des wenigstens einen Druckkopfs 1 von einer in der wenigstens einen 3D-Druckstation 29 angeordneten Produktionspalette 32 in vertikaler Richtung 37 in Abhängigkeit eines Druckfortschritts veränderbar ist.

Der wenigstens eine Druckkopf 1 und die wenigstens einen Schichtablagevorrichtung 30 weisen eine Längserstreckung in Richtung 41 auf und sind in eine Richtung 40 quer dazu entlang der Führungsschienen 92 bewegbar, was mittels eines Doppelpfeils angedeutet ist. Der wenigstens eine Druckkopf 1 oder Bestandteile desselben und/oder die wenigstens eine Schichtablagevorrichtung 30 oder Bestandteile derselben können auch in Richtung 41 bewegbar sein. Es können auch mehr als eine Schichtablagevorrichtung 30 und/oder mehr als ein Druckkopf 1 vorgesehen sein. Dadurch lässt sich die Druckgeschwindigkeit erhöhen.

Mittels der Schichtablagevorrichtung 30 können Schichten 34, 35 wenigstens eines partikelförmigen Zuschlagstoffs 31 auf der Produktionspalette 32 abgelegt werden. Mit Hilfe des Druckkopfs 1 kann eine vorbestimmte Dosis eines Bindemittels oder eines Wasser-Bindemittel-Gemischs 2, umfassend Wasser und wenigstens ein hydraulisches Bindemittel, insbesondere ein zementöses Bindemittel, an wenigstens einem örtlich vorbestimmten Bereich 33 der Produktionspalette 32 (für den Fall, dass noch keine Schicht des partikelförmigen Zuschlagstoffs 31 auf der Produktionspalette 32 abgelegt wurde) oder einer von der Schichtablagevorrichtung 30 auf der Produktionspalette 32 abgelegten Schicht 34, 35 des wenigstens einen Zuschlagstoffs 31 gesteuert abgegeben werden.

Die Schichtablagevorrichtung 30 kann wie im dargestellten Fall einen Ablagetrichter 66 als Zwischenspeicher für den wenigstens einen partikelförmigen Zuschlagstoff 31 aufweisen.

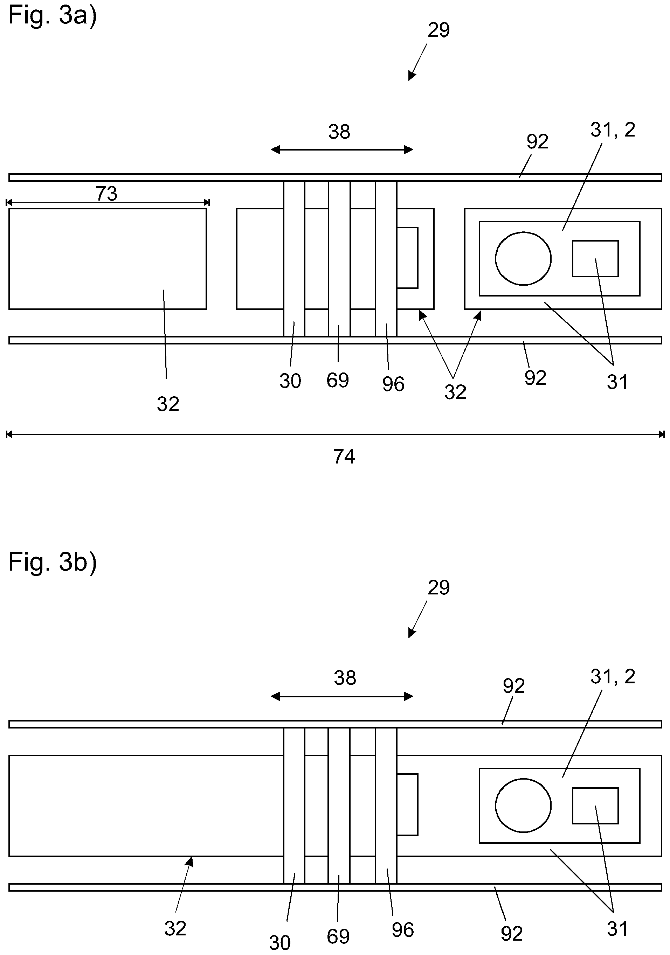

Die Figuren 3a) und 3b) zeigen zwei weitere Ausführungsbeispiele einer 3D-Druckstation 29 in einer schematisch dargestellten Draufsicht, wobei sich die beiden Ausführungsbeispiele dadurch unterscheiden, dass im Falle der Figur 3a) mehrere kürzere Produktionspaletten 32 zum Einsatz kommen, welche in Serie hintereinander in der Druckstation 29 anordenbar sind, und im Falle der Figur 3b) eine lange Produktionspalette 32 zum Einsatz kommt, auf welcher mehrere Fertigbauelemente druckbar sind. Die Druckrichtung 38 ist mit einem Pfeil markiert.

Die Anlage 53 umfasst also wenigstens eine Produktionspalette 32, welche eine Länge 73 aufweist und die wenigstens eine 3D-Druckstation 29 eine Länge 74 aufweist, besonders bevorzugt wobei die Länge 74 der wenigstens einen 3D-Druckstation 29 wenigstens doppelt so groß ist wie die Länge 73 der wenigstens einen Produktionspalette 32.

Im Vergleich zum Ausführungsbeispiel der Figur 2 umfasst die wenigstens eine 3D-Druckstation 29 wenigstens eine weitere Schichtablagevorrichtung 69 zur schichtweisen Ablage wenigstens eines Isoliermaterials 70, vorzugsweise wobei die Anlage 53 wenigstens eine weitere Speichervorrichtung 71, in welcher das wenigstens eine Isoliermaterial 70 speicherbar ist, und wenigstens eine weitere Fördervorrichtung 72, mit welcher das wenigstens eine in der wenigstens einen weiteren Speichervorrichtung 71 gespeicherte Isoliermaterial 70 zur wenigstens einen weiteren Schichtablagevorrichtung 30 der wenigstens eine 3D-Druckstation 29 beförderbar ist, umfasst (vergleiche auch die Figur 5). In diesem Zusammenhang bietet es sich an, dass die Anlage 53 auch wenigstens eine Saugvorrichtung zur Absaugung von nichtgebundenem partikelförmigem Zuschlagstoff 31 umfasst.

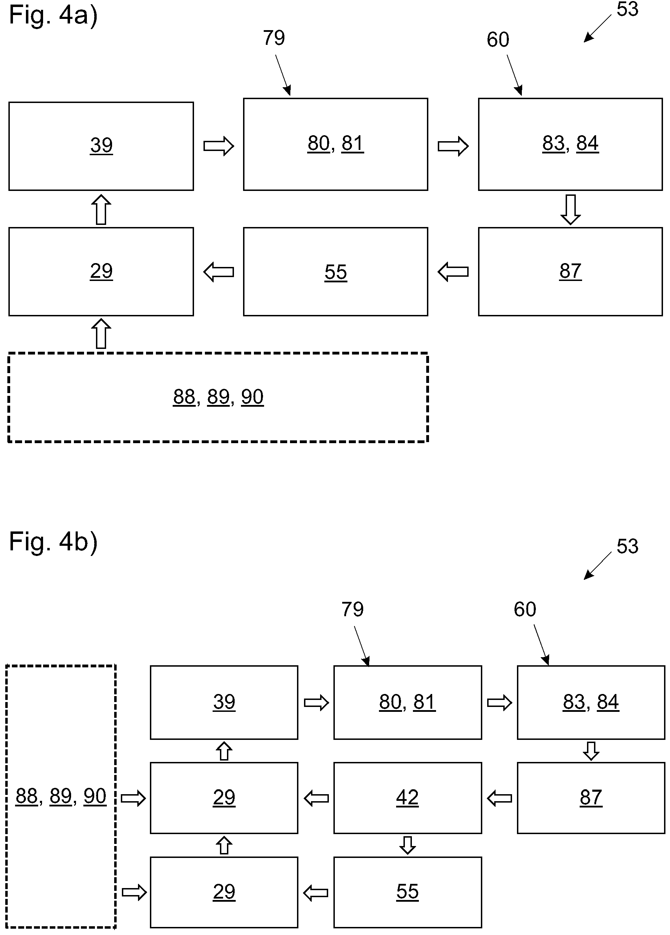

Die Figuren 4a) und 4b) zeigen zwei weitere Ausführungsbeispiele einer Anlage 53 zur Herstellung eines Betonfertigbauelements. Die Anlagen 53 sind als Umlaufanlagen konzipiert, in denen eine oder mehrere Produktionspaletten 32 die Stationen der Anlage 53 umlaufend mittels eines geeigneten Transportsystems durchlaufen.

Die Anlagen 53 weisen jeweils einen oder mehrere Stellplätze 55 auf. Diese können als Zwischenspeicher für leere Produktionspaletten 32 dienen. Von dort können die Produktionspaletten 32 zu einer oder mehreren 3D-Druckstationen 29 transportiert werden. Zur Verwaltung mehrerer Stellplätze 55 kann eine Zentralschiebebühne 42 vorgesehen sein.

Optional können wenigstens eine Richtmaschine 88, wenigstens eine Bewehrungsschweißvorrichtung 89 und/oder wenigstens eine Bewehrungsablagevorrichtung 90, mit welcher wenigstens eine Bewehrung 91 auf der wenigstens einen in der wenigstens einen 3D-Druckstation 29 angeordneten Produktionspalette 32 anordenbar ist, vorgesehen sein.

Die Anlagen 53 weisen jeweils wenigstens eine Trockenstation 79 auf, in welcher die wenigstens eine Produktionspalette 32 anordenbar ist, um ein in der wenigstens einen 3D-Druckstation 29 auf der wenigstens einen Produktionspalette 32 gedrucktes Betonfertigbauelement 54 auszuhärten, wobei die wenigstens eine Trockenstation 79 wenigstens eine Heizvorrichtung 80 und wenigstens eine Regalanlage 81 umfasst, um wenigstens zwei Produktionspaletten 32 übereinander in der wenigstens einen Trockenstation 79 anzuordnen. Die Trockenstation 79 ist in Produktionsrichtung nach der wenigstens einen 3D-Druckstation 29 angeordnet.

Zur Bedienung der Regalanlage 81 kann ein Regalbediengerät 39 vorgesehen sein.

Im Anschluss an die Trockenstation 79 können die Produktionspaletten 32 in eine Entpackungsstation 60 transportiert werden. Diese kann wenigstens eine Kippvorrichtung 83, und/oder wenigstens eine Abtransportvorrichtung 84 zum Abtransport des nichtgebundenen partikelförmigen Zuschlagstoffs 31 umfassen.

Und schließlich weisen die Anlagen 53 in den gezeigten Ausführungsbeispielen jeweils wenigstens eine Aufbereitungsstation 87 zur Aufbereitung der wenigstens einen Produktionspalette 32 auf, vorzugsweise wobei die wenigstens eine Aufbereitungsstation 87 wenigstens eine Reinigungsmittel- und/oder Trennmittel-Sprüheinrichtung umfasst.

Wie beim ersten Ausführungsbeispiel gemäß Figur 1 sind die Anlagen 53 schalungsroboterlos ausgebildet.

Die Figur 5 zeigt ein Schema eines weiteren Ausführungsbeispiels einer 3D-Druckstation 29 mit den dazugehörigen Versorgungskreisläufen.

Das vom wenigstens einen Druckkopf 1 in diesem Fall abgebbare Wasser-Bindemittel-Gemisch 2 umfasst Wasser und wenigstens ein zementöses Bindemittel. Die dazugehörige Anlage 53 umfasst wenigstens eine Zementspeichervorrichtung 61, in welcher Zement speicherbar ist, und/oder wenigstens eine Sackaufgabestation 62 für Zementsäcke, wobei die wenigstens eine Zementspeichervorrichtung 61 und/oder die wenigstens eine Sackaufgabestation 62 mit der wenigstens einen Mischvorrichtung 58, mit welcher das wenigstens eine Wasser-Bindemittel-Gemisch 2 bereitstellbar ist, in zementleitender Verbindung steht.

Über einen Fließmitteldosierer 99 kann wenigstens ein Fließmittel der Mischvorrichtung 58 dosiert zugeführt werden.

Im Anschluss an die Mischvorrichtung 58 kann ein Ausgleichsbehälter 98 angeordnet sein, aus dem einerseits das Wasser-Bindemittel-Gemisch 2 mittels einer Zuführvorrichtung 59, z.B. in Form einer Pumpe, über einen Filter 97 wenigstens einem Druckkopf 1 zuführbar ist. Andererseits kann nicht ausgebrachtes Wasser-Bindemittel-Gemisch 2 wieder vom Druckkopf 1 in den Ausgleichsbehälter 98 rückgeführt werden. Wichtig ist, dass das Wasser-Bindemittel-Gemisch 2 immer in Bewegung bleibt.

Die Schichtablagevorrichtung 30 der 3D-Druckstation 29 wird aus einer Speichervorrichtung 56 mittels einer Fördervorrichtung 57, z.B. in Form einer Pumpe, mit dem aufzutragenden partikelförmigen Zuschlagstoff 31 versorgt. Bei diesem Zuschlagstoff 31 kann es sich beispielsweise um Sand und/oder Blähton handeln.

Optional kann die 3D-Druckstation 29 eine weitere Schichtablagevorrichtung 69 z.B. zur Ausbringung eines Isoliermaterials 70 umfassen. Diese kann in analoger Weise über eine weitere Speichervorrichtung 71 und eine weitere Fördervorrichtung 72, z.B. eine Pumpe, versorgt werden.

Die Versorgungskreisläufe der beiden Schichtablagerungsvorrichtungen 30 und 69 können durch die wenigstens eine Entpackungsstation 60 geschlossen werden. Diese kann wenigstens eine Trennvorrichtung 86 zur Trennung des wenigstens einen partikelförmigen Zuschlagstoffs 31 von wenigstens einem weiteren mittels der wenigstens einen 3D-Druckstation 29 auf die wenigstens eine Produktionspalette 32 aufgetragenen Stoffes aufweisen, vorzugsweise wobei die wenigstens eine Trennvorrichtung 86 wenigstens ein Sieb und/oder wenigstens einen Windsichter umfasst.

Die derart voneinander getrennten Stoffe können dann jeweils mittels einer Rückführungsvorrichtung 44 oder 85 und jeweils ein Sieb 43 in die Speichervorrichtungen 56 und 71, bei denen es sich z.B. um ein Silo handeln kann, zurückgeführt werden. Die Rückführungsvorrichtungen 44 oder 85 können z.B. eine Pumpe, eine Absaugung und/oder ein Transportsystem umfassen.

Die Figur 6 zeigt ein Schema eines ersten Ausführungsbeispiels eines Druckbalkens 96. Der Druckbalken 96 umfasst mehrere, z.B. fünf, Druckköpfe 1, welche parallel über Leitungen 51 mit dem Wasser-Bindemittel-Gemisch 2 versorgt werden können.

Der Versorgungskreislauf umfasst einen Ausgleichsbehälter 98. In diesem kann ein Mischpropeller 100 angeordnet sein.

Mittels einer Zuführvorrichtung 59 kann das Wasser-Bindemittel-Gemisch 2 in einen Zwischentank 122 befördert werden. Dieser kann eine Spüldüse 104 aufweisen.

Weiterhin kann der Zwischentank 122 mit einem Schnellentlüftungsventil 103 gekoppelt sein, mit welchem der Zwischentank 122 in einem Notfall, z.B. einer Verstopfung, entlüftet werden kann. Das Bezugszeichen 101 bezeichnet den Düsendruck, das Bezugszeichen den Abfluss des Schnellentlüftungsventils 103.

Zur Druckregelung können ein Quetschventil 108, ein Druckregler 107 und ein Niveausensor 105 vorgesehen sein, welche mit einer Steuer- und/oder Regelungsvorrichtung 26 verbunden oder verbindbar sind.

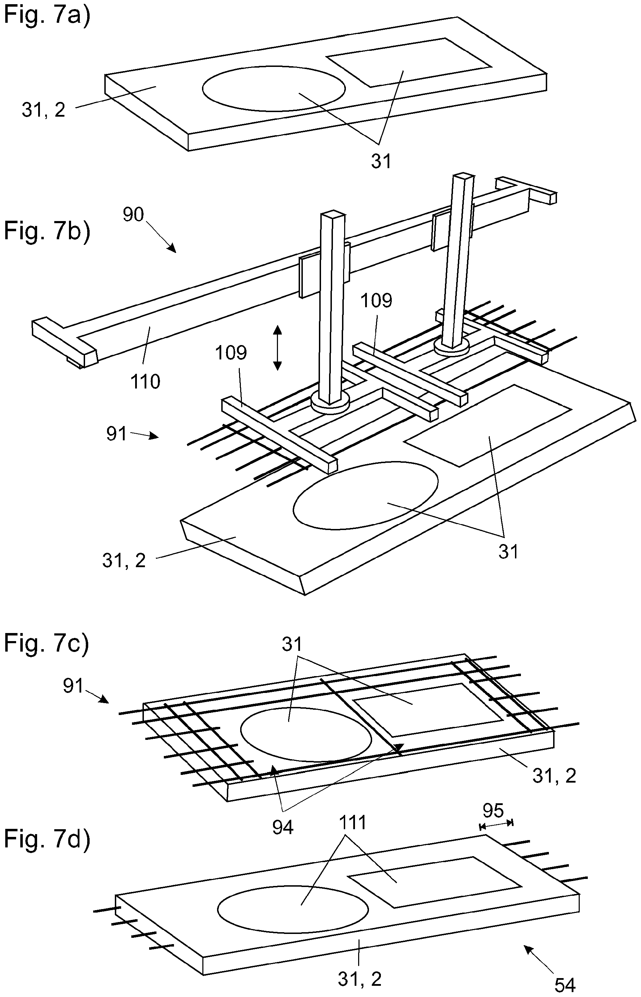

Die Figuren 7a) bis 7d) zeigen in vier Teilschritten ein erstes Ausführungsbeispiel eines Verfahrens zum Herstellen eines 3D-gedruckten Fertigteils, vorzugsweise Betonfertigbauelements 54, für die Bauindustrie.

Das Verfahren weist die folgenden Verfahrensschritte auf:
Es wird in einem ersten Verfahrensschritt wenigstens eine Schicht 34, 35, 36 wenigstens eines partikelförmigen Zuschlagstoffs 31 auf einer Produktionspalette 32 mittels wenigstens einer Schichtablagevorrichtung 30 abgelegt.

Es wird in einem zweiten Verfahrensschritt eine vorbestimmte Dosis 49 wenigstens eines Bindemittels oder wenigstens eines Wasser-Bindemittel-Gemischs 2 an wenigstens einem örtlich vorbestimmten Bereich 33 der wenigstens einen Schicht 34, 35, 36 des wenigstens einen Zuschlagstoffs 31 mittels wenigstens eines Druckkopfs 1 abgegeben.

Es wird in einem dritten Verfahrensschritt wenigstens eine Bewehrung 91 mittels wenigstens einer Bewehrungsablagevorrichtung 90 zumindest bereichsweise auf und/oder in zumindest dem wenigstens einen örtlich vorbestimmten Bereich 33, an welchem die vorbestimmte Dosis 49 des wenigstens einen Bindemittels oder des wenigstens einen Wasser-Bindemittel-Gemischs 2 im Zuge des zweiten Verfahrensschritts abgegeben wurde, angeordnet.

Im Zuge des dritten Verfahrensschritts kann wenigstens eine Bewehrung 91 in Form einer Bewehrungsmatte, vorzugsweise aus Stahl und/oder Kunststoff, oder in Form von Fasern, vorzugsweise Glasfasern, angeordnet werden.

Der erste und der zweite Verfahrensschritt können nach dem dritten Verfahrensschritt wenigstens einmal wiederholt werden, und/oder der erste und der zweite Verfahrensschritt können in umgekehrter Reihenfolge durchgeführt werden.

Die wenigstens eine Bewehrung 91 kann in wenigstens einem Bereich der wenigstens einen Schicht 34, 35, 36 des wenigstens einen Zuschlagstoffs 31, in welchem nicht das wenigstens eine Bindemittel oder das wenigstens eine Wasser-Bindemittel-Gemisch 2 abgegeben wurde, wenigstens eine Aussparung 94 aufweisen.

Die Bewehrung 91 wird im Zuge des dritten Verfahrensschrittes zumindest bereichsweise in den örtlich vorbestimmten Bereich 33 der wenigstens einen Schicht 34, 35, 36 des wenigstens eines partikelförmigen Zuschlagstoffs 31, in welchem die vorbestimmte Dosis 49 des wenigstens einen Bindemittels oder des wenigstens einen Wasser-Bindemittel-Gemischs 2 abgegeben wurde, versenkt, vorzugsweise durch Drücken und/oder Vibration.

Die Bewehrung 91 kann auch über mehrere Drucklagen im Zuge des dritten Verfahrensschrittes eingesenkt werden. Auch muss die Bewehrung 91 nicht vollständig versenkt werden. Auch ein Überstand von der Oberseite, z.B. von 1-2 cm, ist möglich.

Die wenigstens eine Bewehrung 91 kann im Zuge des dritten Verfahrensschrittes derart angeordnet werden, dass die wenigstens eine Bewehrung 91 einen seitlichen Überstand 95 über eine Seite der wenigstens einen Schicht 34, 35, 36 des wenigstens eines partikelförmigen Zuschlagstoffs 31 aufweist. Solche Überstände, welche insbesondere dazu dienen, die Bauteile mit weiteren Bauteilen zu verbinden, können in konventionellen Anlagen, in denen Schalungen zum Einsatz kommen, nur mit einem enorm hohen Aufwand realisiert werden.

Nach dem Entpacken des hergestellten Fertigteils 54 von losem nicht gebundenem partikelförmigem Zuschlagstoff 31 verbleiben gedruckte, ohne Schalungen realisierte, Öffnungen 111, z.B. als Fensteraussparungen.

In der Figur 7b) ist schematisch eine Bewehrungsablagevorrichtung 90 dargestellt, mit welcher die wenigstens eine Bewehrung 91 zumindest bereichsweise auf und/oder in zumindest dem wenigstens einen örtlich vorbestimmten Bereich 33, an welchem die vorbestimmte Dosis 49 des wenigstens einen Bindemittels oder des wenigstens einen Wasser-Bindemittel-Gemischs 2 im Zuge des zweiten Verfahrensschritts abgegeben wurde, anordenbar ist. Die Bewehrungsablagevorrichtung 90 kann z.B. zwei Greifer 109 aufweisen, welche entlang eines Trägers 110 bewegbar gelagert sind.

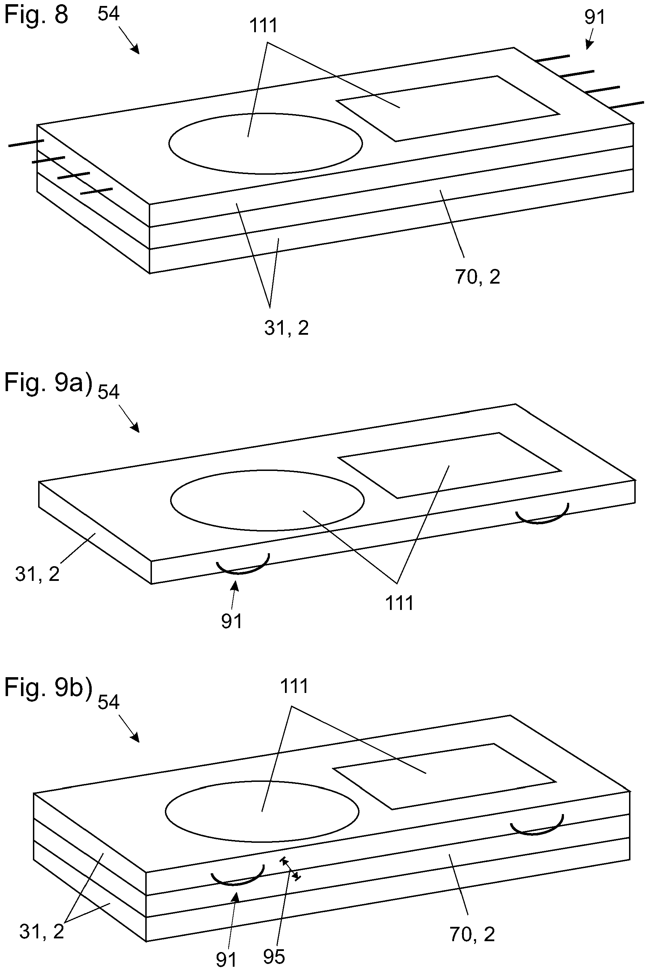

Die Figur 8 zeigt ein weiteres Ausführungsbeispiel eines gedruckten Betonfertigbauelements 54, welches neben einer oberen Schicht, welche dem in der Figur 7d) dargestellten Betonfertigbauelement 54 entspricht, eine untere Schicht ohne Bewehrung 91 und eine dazwischen angeordnete Schicht aus einem mitgedruckten Isoliermaterial 70 aufweist.

Die Figuren 9a und 9b zeigen weitere Ausführungsbeispiele eines gedruckten Betonfertigbauelements 54, bei denen Bewehrungen 91 in Form von Abhubankern eingebaut sind. Diese können wie dargestellt ausstehend oder versenkt in einer gedruckten Tasche angeordnet sein.

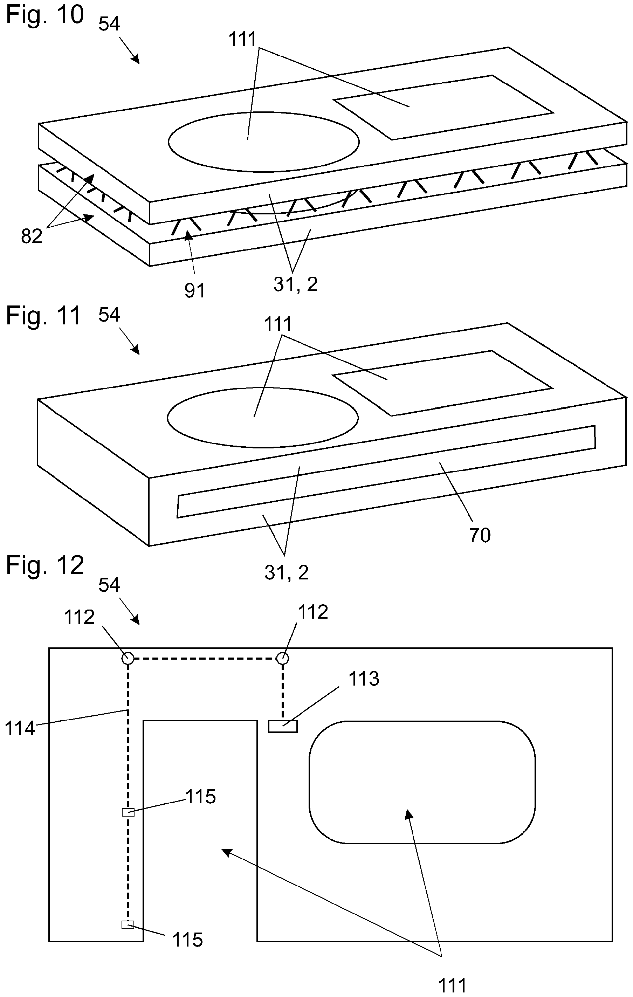

Die Figur 10 zeigt ein weiteres Ausführungsbeispiel eines gedruckten Betonfertigbauelements 54 in Form einer Doppelwand. Die Doppelwand weist zwei voneinander beabstandeten Seitenelementen 82 auf, die über wenigstens eine Bewehrung 91 miteinander verbunden sind.

Die beiden Seitenelemente 82 können dabei entweder gesondert auf zwei Produktionspaletten 32 gedruckt und dann zusammengefügt werden oder im Zuge eines einzigen Druckvorgangs auf einer Produktionspalette 32 gedruckt werden.

Die Figur 11 zeigt ein weiteres Ausführungsbeispiel eines gedruckten Betonfertigbauelements 54 mit einer Schicht aus Isoliermaterial 70. In diesem Fall handelt es sich um einen loses, d.h. nichtgebundenes Isoliermaterial.

Das Betonfertigbauelement 54 kann dadurch hergestellt werden, dass in einem weiteren Verfahrensschritt nichtgebundener partikelförmiger Zuschlagstoff 31 zumindest in einem Bereich entfernt, vorzugsweise abgesaugt, wird und in einem weiteren Verfahrensschritt mittels wenigstens einer weiteren Schichtablagevorrichtung 30 wenigstens ein Isoliermaterial 70 in jenem Bereich abgelegt wird, in dem der nichtgebundene partikelförmige Zuschlagstoff 31 entfernt wurde.

Die Seiten des Betonfertigbauelements 54 können durch gedruckte Seitenwände oder andere Maßnahmen verschlossen werden, damit das lose Isoliermaterial 70 nicht aus dem Betonfertigbauelement 54 herausrinnen kann.

Die Figur 12 zeigt ein weiteres Ausführungsbeispiel eines gedruckten Betonfertigbauelements 54 mit gedruckten Aussparung 112 für Unterputzdosen, Aussparung 113 für eine Rollosteuerung, Aussparungen 114 für Unterputz-Elektroleitungen und Aussparungen 115 für Schalter.

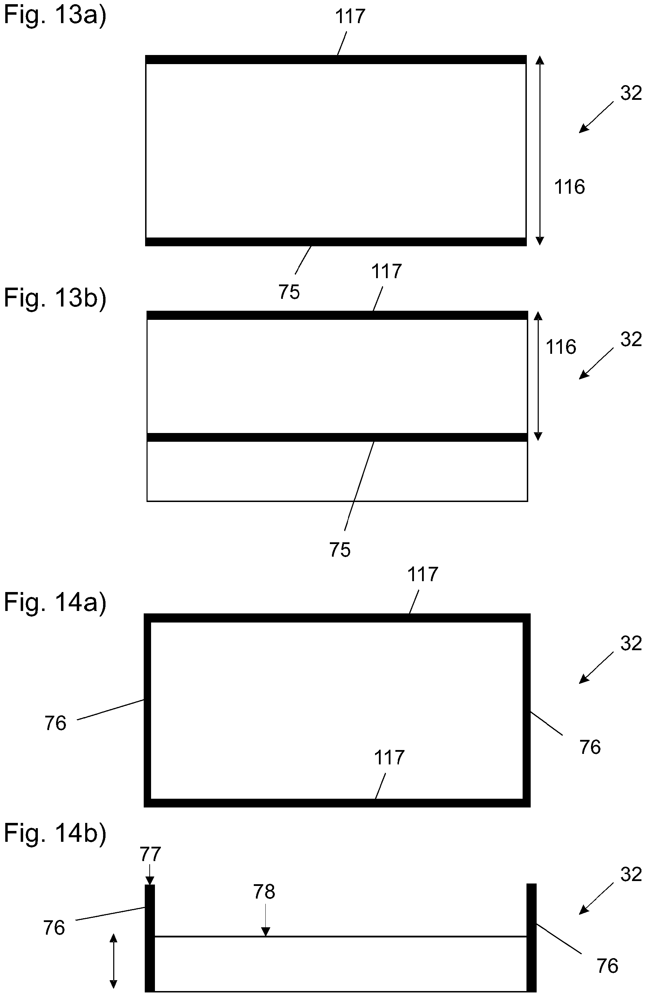

Die Figuren 13a und 13b zeigen ein erstes Ausführungsbeispiel einer Produktionspalette 32, welche eine feste Seitenbegrenzung 117 und eine, z.B. manuell, Seitenbegrenzung 75 umfasst. Auf diese Weise kann eine Breite 116 des bedruckbaren Bereichs verändert werden. Das kann beispielsweise dann sinnvoll sein, wenn ein kleineres Fertigbauteil gedruckt werden soll.

Die Figuren 14a und 14b zeigen ein weiteres Ausführungsbeispiel einer Produktionspalette 32, wobei die Produktionspalette 32 zwei höhenverstellbare Seitenbegrenzungen 76 umfasst, wobei die höhenverstellbaren Seitenbegrenzungen 76 jeweils in eine erste Stellung an der Produktionspalette 32 bringbar sind, in welcher die Seitenbegrenzungen 76 ein auf der Produktionspalette 32 bedruckbares Volumen seitlich begrenzen, und in zumindest eine zweite Stellung, in welcher eine Oberseite 77 der Seitenbegrenzungen 76 im Wesentlichen mit einer Oberseite 78 der Produktionspalette 32 fluchtet.

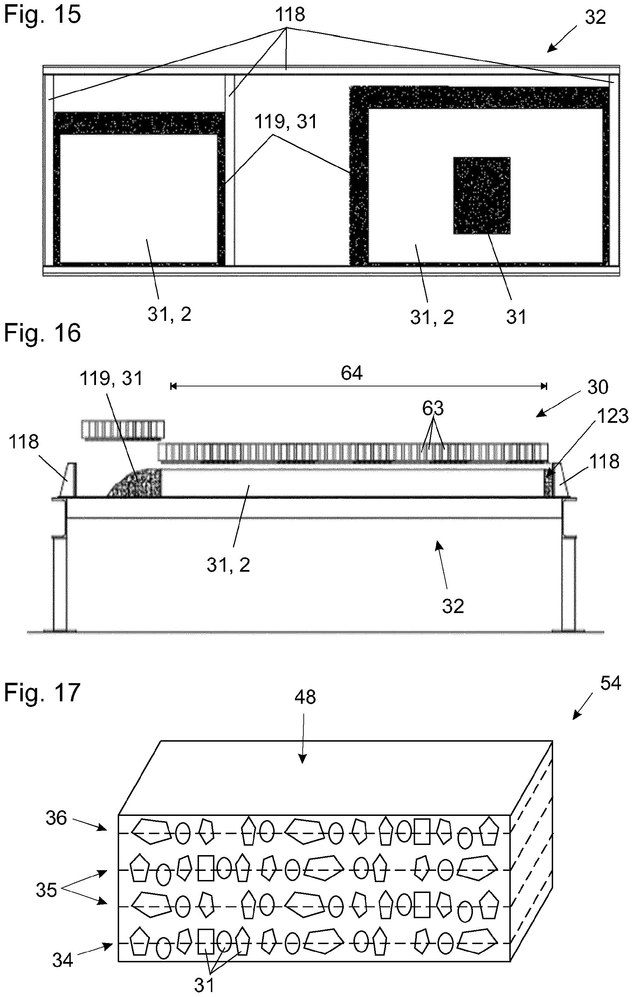

Die Figur 15 zeigt ein weiteres Ausführungsbeispiel einer Produktionspalette 32 mit zwei bedruckten Bereichen. Es sind Begrenzungen 118 vorhanden, welche fest, verschiebbar oder höhenverstellbar ausgebildet sein können.

Eine seitliche Begrenzung eines gedrückten Fertigbauelements muss aber nicht zwingend durch Begrenzungen in Form von separaten Begrenzungselementen erfolgen. Eine seitliche Begrenzung kann auch im Zuge eines Druckprozesses in Form von Schüttkegeln 119 aus dem wenigstens einen partikelförmigen Zuschlagstoff 31 gebildet werden.

Die Figur 16 zeigt ein weiteres Ausführungsbeispiel einer Produktionspalette 32 und einer Schichtablagevorrichtung 30 in einer schematisch dargestellten Querschnittsansicht von der Seite.

Um eine möglichst glatte Seitenfläche 123 eines zu druckenden Fertigbauteils zu erzeugen, kann ein Düsenabstand eines Druckkopfes 1 zu einer seitlichen Begrenzung möglichst klein gewählt werden. Im Idealfall kann auf diese Weise eine quasi schalungsglatte Seitenfläche 123 erzeugt werden.

Es bietet sich an, dass die Schichtablagevorrichtung 30 wie im dargestellten Fall mehrere Segmente 63 aufweist, die einzeln aktivierbar und deaktivierbar sind, um eine vorbestimmte, d.h. variabel einstellbare, Schichtablagebreite 64 zu erzielen. In diesem Zusammenhang bietet es sich an, dass die Schichtablagevorrichtung 30 innere und/oder äußere Schotten aufweist.

In einer analogen Weise kann es vorgesehen sein, dass der Druckbalken mehrteilig ausgebildet ist und einzeln aktivierbar und deaktivierbar Druckköpfe 1 aufweist, um eine vorbestimmte Druckbreite zu erzielen.

Die Figur 17 zeigt ein weiteres Ausführungsbeispiel eines Betonfertigbauelements 54, hergestellt nach einem vorbeschriebenen Verfahren. Dabei werden Schichten 34, 35, 36 des wenigstens einen partikelförmigen Zuschlagstoffs 31 auf der Produktionspalette 32 mittels der wenigstens einen Schichtablagevorrichtung 30 abgelegt. Die Schichten 34, 35, 36 sind durch gestrichelte Linien angedeutet. Es wird eine vorbestimmte Dosis 49 des Wasser-Bindemittel-Gemischs 2 an örtlich vorbestimmten Bereichen 33 der Schichten 34, 35, 36 des wenigstens einen Zuschlagstoffs 31 mittels des Druckkopfs 1 abgegeben.

Beim dargestellten Betonfertigbauelement 54 wurden vor der Ablage einer ersten Schicht 34 des wenigstens einen Zuschlagstoffs 31 auf der Produktionspalette 32 eine vorbestimmte Dosis 49 des wenigstens einen Wasser-Bindemittel-Gemischs 2 an wenigstens einem örtlich vorbestimmten Bereich 33 der Druckplattform 32 abgegeben wird, und nach der Ablage einer letzten Schicht 36 des wenigstens einen Zuschlagstoffs 31 eine vorbestimmte Dosis 49 des Wasser-Bindemittel-Gemischs 2 an wenigstens einem örtlich vorbestimmten Bereich 33 der letzten Schicht 36 des wenigstens einen Zuschlagstoffs 31 abgegeben. Auf diese Weise sind an der Ober- und Unterseite des Betonfertigbauelements 54 sehr glatte Oberflächen 48 erzeugbar, welche ähnlich glatt sind, wie die mittels Schalungen in konventioneller Weise erzeugbaren Oberflächen.

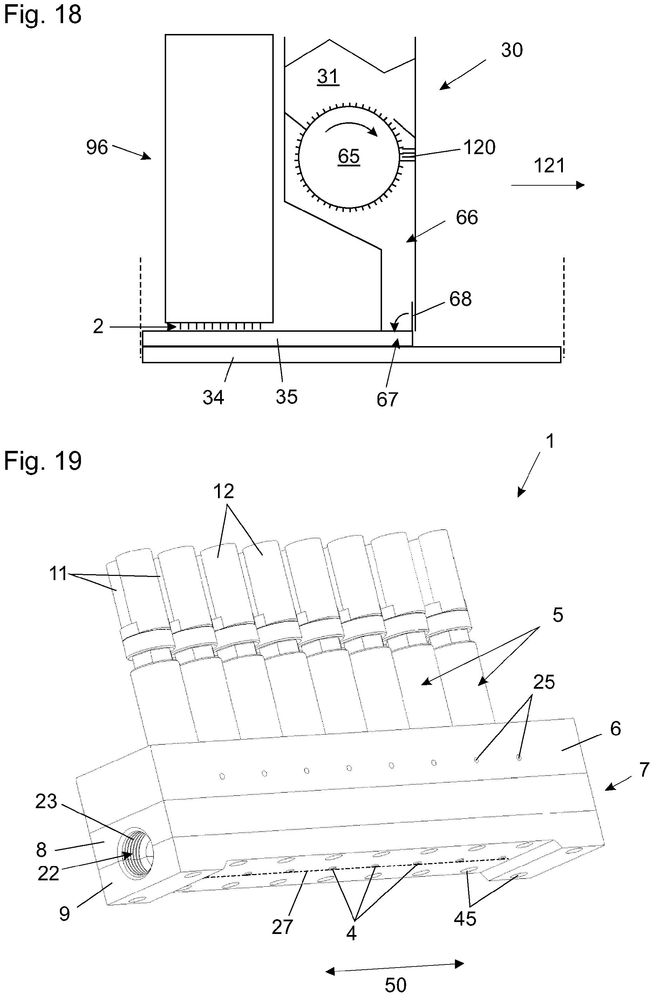

Die Figur 18 zeigt ein Ausführungsbeispiel eines Druckbalkens 30 und einer Schichtablagevorrichtung 30 einer 3D-Druckstation in einer schematisch dargestellten Querschnittsansicht von der Seite.

Die Schichtablagevorrichtung 30 umfasst eine Dosierwalze 65, über welche der wenigstens eine partikelförmige Zuschlagstoff 31 auf der wenigstens einen Produktionspalette 32 auftragbar ist.

Es ist eine Entnahmevorrichtung 120, z.B. in Form einer Bürste, vorgesehen, mit welcher der wenigstens eine partikelförmige Zuschlagstoff 31 dosiert der Dosierwalze 65 entnehmbar ist.

Die Dosierwalze 65 kann auch mehrteilig ausgebildet sein.

Es ist ein Ablagetrichter 66 vorgesehen, welcher mit wenigstens einer Vibrationsvorrichtung in Vibration versetzbar ist, sodass ein Verkanten von großkörnigem Material verhinderbar ist.

Die Schichtablagevorrichtung 30 umfasst wenigstens eine Abgabeöffnung 67 und wenigstens eine Dosierklappe 68 , mit welcher die wenigstens eine Abgabeöffnung 67 unterschiedlich weit verschließbar ist, sodass eine Ausgabemenge des wenigstens einen partikelförmigen Zuschlagstoffs 31 dosierbar ist.

Die Bewegungsrichtung des Druckbalkens 30 und der Schichtablagevorrichtung 30 ist mit dem Bezugszeichen 121 kenntlich gemacht.

Der Druckballen 30 und die Schichtablagevorrichtung 30 oder zumindest ein Teil der Schichtablagevorrichtung 30 sind einzeln und unabhängig voneinander heb- und senkbar.

Die Figur 19 sowie die nachfolgenden Figuren zeigen ein schematisch dargestelltes Ausführungsbeispiel eines Druckkopfes 1 zur gesteuerten Abgabe eines Wasser-Bindemittel-Gemischs 2, umfassend Wasser und wenigstens ein hydraulisches Bindemittel, insbesondere ein zementöses Bindemittel, wobei der Druckkopf 1 einen Zuführkanal 3 zur Zufuhr des Wasser-Bindemittel-Gemischs 2, mehrere Auslassöffnungen 4, welche in Fluidverbindung mit dem Zuführkanal 3 bringbar sind, und mehrere Ventile 5, mit welchen die Auslassöffnungen 4 gesteuert öffenbar und verschließbar ist, wodurch eine vorbestimmte Dosis 49 des Wasser-Bindemitte-Gemischs 2 durch die Auslassöffnungen 4 abgebbar ist, umfasst.

Die Auslassöffnungen 4 sind äquidistant auf einer Linie 27 angeordnet.

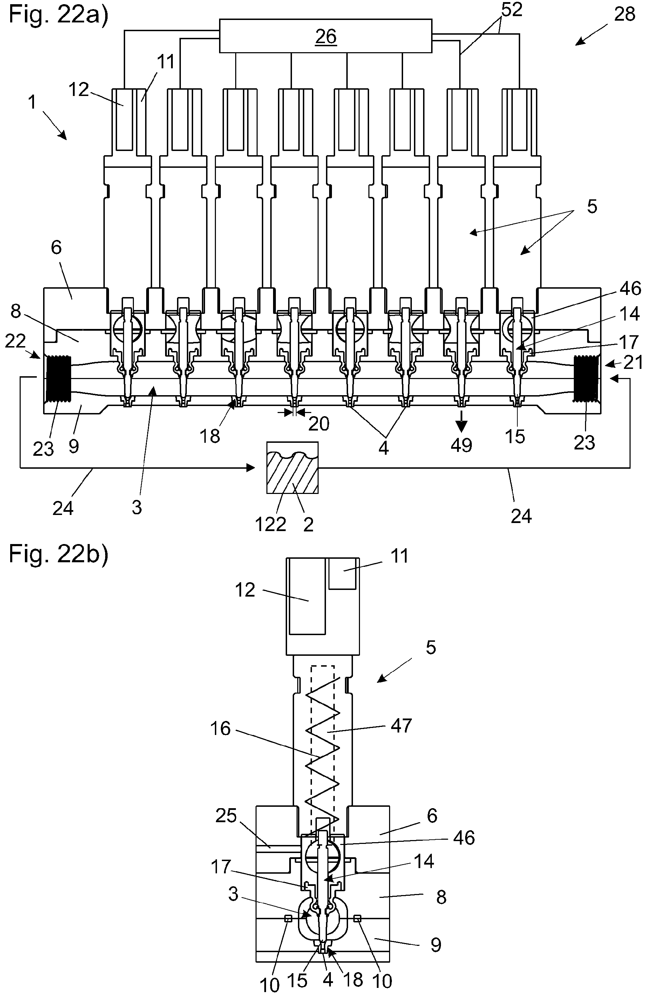

Die Ventile 5 sind als elektropneumatische Ventile ausgebildet und weisen jeweils einen Druckluftanschluss 11 und einen Elektrikanschluss 12 auf. Über den Druckluftanschluss 11 kann das Ventil 5 mit Druckluft versorgt werden, mit der in weiterer Folge ein Zylinder 47, welcher mit einer Ventilstange 14 bewegungsgekoppelt verbunden ist, betätigbar ist vergleiche auch Figur 22b.

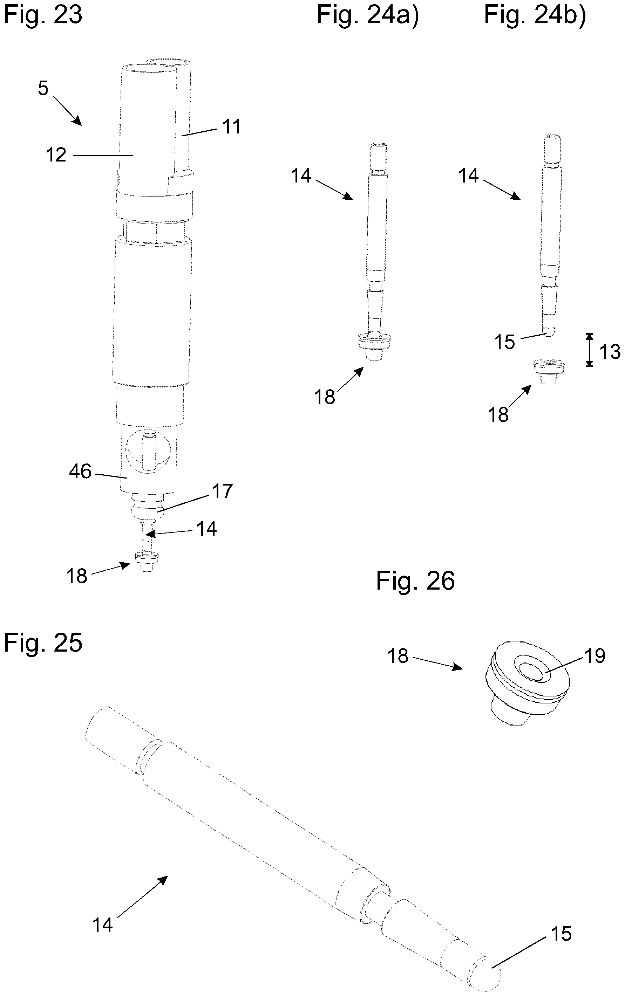

Die Ventile 5 weisen jeweils eine, vorzugsweise über einen Verstellweg 13 zwischen 0,5 und 1,5 mm, verstellbare Ventilstange 14, vorzugsweise aus wenigstens einem Hartmetall, auf. Der Verstellweg 13 ist in der Figur 24b dargestellt.

Die Ventilstangen 14 können wie im dargestellten Fall ein freies Ende 15 aufweisen, welches kugelkopfförmig ausgebildet ist.

Die Ventile 5 können wenigstens eine Rückstellfeder 16 umfassen, bevorzugt wobei die wenigstens eine Rückstellfeder 16 derart ausgebildet ist, dass die zugeordnete Auslassöffnung 4 mit einer Schließkraft zwischen 10 und 50 N, besonders bevorzugt mit einer Schließkraft zwischen 20 und 40 N, verschließbar ist. In der Figur 22b ist eine solche Rückstellfeder schematisch dargestellt.

Die Ventile 5 können ein Lager 46 für die Ventilstange 14 aufweisen, wobei das Lager 46 wie im dargestellten Fall hülsenförmig ausgebildet sein kann. Das Lager 46 umgibt die Ventilstange 14 und die Ventilstange 14 bewegt sich relativ zum Lager 46.

Pro Ventil 5 ist eine, vorzugsweise austauschbare, Dichtmembran 17 vorgesehen, welche die Ventilstange 14 gegen ein Eindringen des Wasser-Bindemittel-Gemischs 2 abdichtet.

Im konkreten Fall ist die Dichtmembran dichtend zwischen der Ventilstange 14 und dem Lager 46 angeordnet.

Der Druckkopf 1 weist mehrere Entlüftungskanäle 25 auf, mit welchen ein Druckausgleich für die Ventilstangen 14 erzeugbar ist vergleiche auch Figur 22b. Ohne die Entlüftungskanäle 25 besteht die Gefahr, dass sich auf der dem Ventil 5 zugewandten Seite der Dichtmembran 17 ein Unterdruck entsteht, durch welchen ein Teil des Wasser-Bindemittel-Gemischs 2 angesaugt wird und dadurch in das Ventil 5 eindringt.

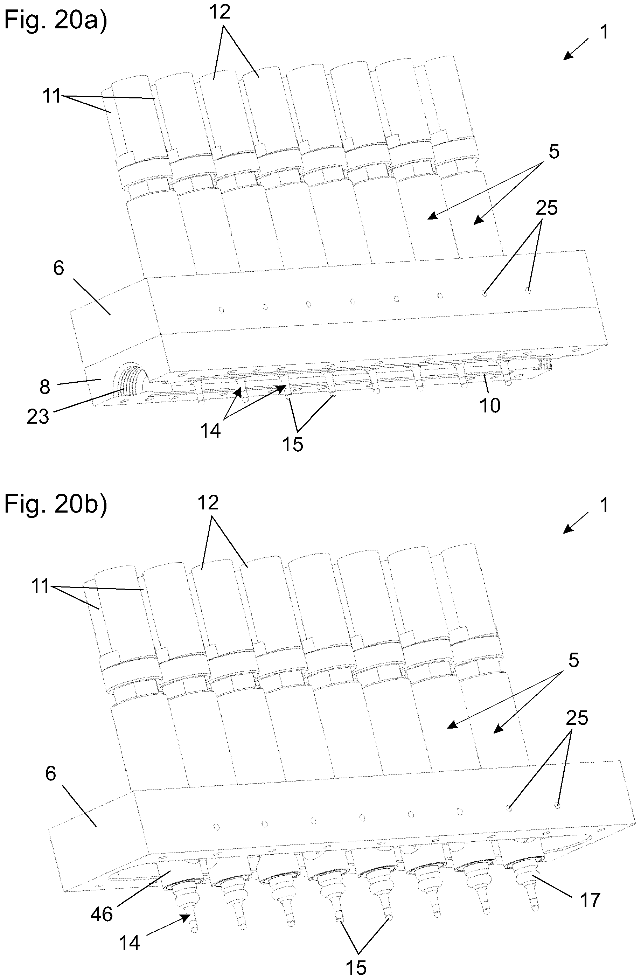

Anhand der Figuren 20a und 20b ist besonders gut erkennbar, dass der Druckkopf 1 einen Grundkörper 6, an welchem die Ventile 5 angeordnet sind, und einen mit dem Grundkörper 6 lösbar verbindbaren Wechselkörper 7 aufweist, wobei am Wechselkörper 7 die Auslassöffnungen 4 und der Zuführkanal 3 angeordnet sind. Zur lösbaren Verbindung des Wechselkörpers 7 am Grundkörper 6 können Befestigungsmittel 45 vorgesehen sein (vergleiche Figur 19), welche wie im dargestellten Fall als Schrauben ausgebildet sein können, die in Gewinde, welche im Grundkörper 6 ausgebildet sind, eingreifen.

Der Wechselkörper 7 besteht aus wenigstens einem säurebeständigen Kunststoff, vorzugsweise ausgewählt aus einer Gruppe bestehend aus PE, PVC, POM, PTFE und Mischungen davon und umfasst wenigstens ein Spritzgussteil.

Der Wechselkörper 7 weist zwei lösbar miteinander verbindbare Teilkörper 8, 9 auf, vorzugsweise wobei zwischen den zwei Teilkörpern 8, 9 eine Dichtung 10 angeordnet ist (vergleiche die Figuren 20a und 22b).

Die Figur 22a zeigt ein schematisch dargestelltes Ausführungsbeispiel einer Anordnung 28 mit einem Wasser-Bindemittel-Gemisch 2, umfassend Wasser und wenigstens ein hydraulisches Bindemittel, insbesondere ein zementöses Bindemittel, und einem Druckkopf 1 zur gesteuerten Abgabe des Wasser-Bindemittel-Gemischs in einer Querschnittsansicht entlang einer Querschnittsebene parallel zu einer Längsachse 50 des Druckkopfes 1. Die Längsachse 50 ist exemplarisch in der Figur 2 eingezeichnet.

Der Druckkopf 1 ist gemäß dem zuvor beschriebenen bevorzugten Ausführungsbeispiel ausgebildet.

Das wenigstens eine hydraulische Bindemittel ist ausgewählt aus einer Gruppe bestehend aus Portlandzement, Calciumaluminatzement, Calciumsulfoaluminatzement und Mischungen davon.

Das Wasser-Bindemittel-Gemisch 2 umfasst einen Zusatzstoff in Form eines Fließmittels.

Der Zuführkanal 3 weist eine Eingangsöffnung 21 für das Wasser-Bindemittel-Gemisch 2 auf, wobei der Zuführkanal 3 eine der Eingangsöffnung 21 gegenüber liegende Ausgangsöffnung 22 aufweist. Die Eingangsöffnung 21 und die Ausgangsöffnung 22 weisen jeweils ein Gewinde 23 zum Anschluss einer Fluidleitung 24 auf.

Das Wasser-Bindemittel-Gemisch 2 kann in einem Zwischentank 122 angeordnet sein. Die Fluidleitungen 24 verbinden den Zwischentank 122 mit dem Zuführkanal 3 des Druckkopfes **1.**

Es ist eine Steuer- und/oder Regelungsvorrichtung 26 vorgesehen, mit welcher die Ventile 5 des Druckkopfes 1 steuerbar sind. Die Steuer- und/oder Regelungsvorrichtung 26 sind jeweils über Leitungen 52 mit dem Elektrikanschluss 12 der Ventile 5 verbunden.

Mittels der Anordnung 28 kann ein Verfahren zur gesteuerten Abgabe eines Wasser-Bindemittel-Gemischs 2, umfassend Wasser und wenigstens ein hydraulisches Bindemittel, insbesondere ein zementöses Bindemittel, durchgeführt werden, wobei das Verfahren die folgenden Verfahrensschritte umfasst: das Wasser-Bindemittel-Gemisch 2 wird über den Zuführkanal 3 des Druckkopfs 1 den Auslassöffnungen 4 Druckkopfs 1 zugeführt, vorzugsweise mit einem Druck zwischen 0,1 und 2,0 bar, und die Auslassöffnungen 4 werden mittels der Ventile 5 des Druckkopfs 1 gesteuert geöffnet und verschlossen und es wird dadurch eine vorbestimmte Dosis 49 des Wasser-Bindemitte-Gemischs 2 durch die Auslassöffnungen 4 abgegeben.

Die Figuren 23, 24a, 24b, 25 und 26 zeigen Details eines Ausführungsbeispiel eines Ventils 5 des Druckkopfes 1 zur gesteuerten Abgabe eines Wasser-Bindemittel-Gemischs 2 sowie eines mit der Ventilstange 14 des Ventils 5 zusammenwirkenden eines Düsenkörpers 18, in welchem die Auslassöffnung 4 ausgebildet ist. Der Durchmesser 20 vergleiche Figur 22a der Auslassöffnung 4 beträgt zwischen 0,5 und 2,0 mm.

Der Düsenkörper 18 ist aus wenigstens einem Hartmetall oder Keramik gebildet, und weist eine schräge Anpressfläche 19 für ein freies Ende 15 der Ventilstange 14 des Ventils 5 auf. Die schräge Anpressfläche 19 kann wie im dargestellten Fall trichterförmig ausgebildet sein.

## Patentansprüche

1. Verfahren zum Herstellen eines 3D-gedruckten Fertigteils, vorzugsweise Betonfertigbauelements (54), für die Bauindustrie, umfassend die folgenden Verfahrensschritte:
- es wird in einem ersten Verfahrensschritt wenigstens eine Schicht (34, 35, 36) wenigstens eines partikelförmigen Zuschlagstoffs (31) auf einer Produktionspalette (32) mittels wenigstens einer Schichtablagevorrichtung (30) abgelegt,
- es wird in einem zweiten Verfahrensschritt eine vorbestimmte Dosis (49) wenigstens eines Bindemittels oder wenigstens eines Wasser-Bindemittel-Gemischs (2), umfassend Wasser und wenigstens ein hydraulisches Bindemittel, insbesondere ein zementöses Bindemittel, an wenigstens einem örtlich vorbestimmten Bereich (33) der wenigstens einen Schicht (34, 35, 36) des wenigstens einen Zuschlagstoffs (31) mittels wenigstens eines Druckkopfs (1) abgegeben,
- in einem dritten Verfahrensschritt wenigstens eine Bewehrung (91) mittels wenigstens einer Bewehrungsablagevorrichtung (90) zumindest bereichsweise auf und/oder in zumindest dem wenigstens einen örtlich vorbestimmten Bereich (33), an welchem die vorbestimmte Dosis (49) des wenigstens einen Bindemittels oder des wenigstens einen Wasser-Bindemittel-Gemischs (2) im Zuge des zweiten Verfahrensschritts abgegeben wurde, angeordnet wird, **dadurch gekennzeichnet, dass** die Bewehrung (91) im Zuge des dritten Verfahrensschrittes zumindest bereichsweise in den örtlich vorbestimmten Bereich (33) der wenigstens einen Schicht (34, 35, 36) des wenigstens eines partikelförmigen Zuschlagstoffs (31), in welchem die vorbestimmte Dosis (49) des wenigstens einen Bindemittels oder des wenigstens einen Wasser-Bindemittel-Gemischs (2) abgegeben wurde, versenkt wird, vorzugsweise durch Drücken, Rütteln und/oder Vibration.

2. Verfahren nach Anspruch 1, wobei im Zuge des dritten Verfahrensschritts wenigstens eine Bewehrung (91) in Form einer Bewehrungsmatte angeordnet wird, vorzugsweise wobei
- die Bewehrungsmatte aus Stahl und/oder Kunststoff gefertigt ist, und/oder
- die Bewehrungsmatte aus Einzelstäben und/oder wenigstens einem Gitterträger zusammengeschweißt ist, und/oder
- Faserstäbe umfasst.

3. Verfahren nach Anspruch 1 oder 2, wobei im Zuge des dritten Verfahrensschritts wenigstens eine Bewehrung (91) in Form von Fasern, vorzugsweise Glasfasern, angeordnet wird.

4. Verfahren nach einem der Ansprüche 1 bis 3, wobei im Zuge des dritten Verfahrensschritts wenigstens eine Bewehrung (91) in Form wenigstens eines, vorzugsweise mittels wenigstens einer Richtmaschine (88) bereitgestellten, Einzelstabs angeordnet wird.

5. Verfahren nach einem der Ansprüche 1 bis 4, wobei die wenigstens eine Bewehrung (91) in einem weiteren Verfahrensschritt, der zeitlich vor dem dritten Verfahrensschritt erfolgt, in wenigstens einer Bewehrungsschweißvorrichtung (89), welche vorzugsweise als Mattenschweißanlage und/oder als Gitterträgerschweißanlage ausgebildet ist, produziert wird, vorzugsweise wobei die Produktion bedarfssynchron und/oder CAD gesteuert und/oder mit einer Losgröße 1 erfolgt.

6. Verfahren nach einem der Ansprüche 1 bis 5, wobei der erste und der zweite Verfahrensschritt nach dem dritten Verfahrensschritt wenigstens einmal wiederholt werden, und/oder der erste und der zweite Verfahrensschritt in umgekehrter Reihenfolge durchgeführt werden.

7. Verfahren nach einem der Ansprüche 1 bis 6, wobei im Zuge des zweiten Verfahrensschritts wenigstens ein Wasser-Bindemittel-Gemisch (2), umfassend Wasser und wenigstens ein hydraulisches Bindemittel, insbesondere ein zementöses Bindemittel, abgegeben wird, und wobei die Dosis des wenigstens einen abgegebenen Wasser-Bindemittel-Gemischs (2) so groß ist, dass eine zumindest bereichsweise Verflüssigung am wenigstens einen örtlich vorbestimmten Bereich (33) der wenigstens einen Schicht (34, 35, 36) des wenigstens einen Zuschlagstoffs (31) erzielt wird.

8. Verfahren nach einem der Ansprüche 1 bis 7, wobei die wenigstens eine Bewehrung (91) im Zuge des dritten Verfahrensschrittes derart angeordnet wird, dass die wenigstens eine Bewehrung (91) einen seitlichen Überstand (95) über eine Seite der wenigstens einen Schicht (34, 35, 36) des wenigstens eines partikelförmigen Zuschlagstoffs (31) aufweist.

9. Verfahren nach einem der Ansprüche 1 bis 8, wobei in einem weiteren Verfahrensschritt nichtgebundener partikelförmiger Zuschlagstoff (31) zumindest in einem Bereich entfernt, vorzugsweise abgesaugt, wird.

10. Verfahren nach Anspruch 9, wobei in einem weiteren Verfahrensschritt mittels wenigstens einer weiteren Schichtablagevorrichtung (30) wenigstens ein Isoliermaterial (70) in jenem Bereich abgelegt wird, in dem der nichtgebundene partikelförmige Zuschlagstoff (31) entfernt wurde.

11. Verfahren nach einem der Ansprüche 1 bis 10, wobei
- vor der Ablage einer ersten Schicht (34) des wenigstens einen Zuschlagstoffs (31) auf der Produktionspalette (32) eine vorbestimmte Dosis (49) des wenigstens einen Wasser-Bindemittel-Gemischs (2) an wenigstens einem örtlich vorbestimmten Bereich (33) der Druckplattform (32) abgegeben wird, und/oder
- nach der Ablage einer letzten Schicht (36) des wenigstens einen Zuschlagstoffs (31) eine vorbestimmte Dosis (49) des Wasser-Bindemittel-Gemischs (2) an wenigstens einem örtlich vorbestimmten Bereich (33) der letzten Schicht (36) des wenigstens einen Zuschlagstoffs (31) abgegeben wird.

12. Verfahren nach einem der Ansprüche 1 bis 11, wobei mittels des Verfahrens Fertigteile in Form von Wandelementen für Gebäude hergestellt werden.

## Claims

1. Method for producing a prefabricated 3D-printed part, preferably a concrete prefabricated component (54), for the construction industry, comprising the following method steps:
- in a first method step at least one layer (34, 35, 36) of at least one particulate aggregate (31) is deposited on a production pallet (32) by means of at least one layer depositing device (30),
- in a second method step a predetermined dose (49) of at least one binder or at least one water-binder mixture (2), comprising water and at least one hydraulic binder, in particular a cement-based binder, is delivered at at least one locally predetermined region (33) of the at least one layer (34, 35, 36) of the at least one aggregate (31) by means of at least one printhead (1),
- in a third method step at least one reinforcement (91) is arranged, by means of at least one reinforcement depositing device (90), at least in regions on and/or in at least the at least one locally predetermined region (33), at which the predetermined dose (49) of the at least one binder or the at least one water-binder mixture (2) was delivered in the course of the second method step, **characterized in that** the reinforcement (91) is sunk, in the course of the third method step, at least in regions into the locally predetermined region (33) of the at least one layer (34, 35, 36) of the at least one particulate aggregate (31) in which the predetermined dose (49) of the at least one binder or of the at least one water-binder mixture (2) has been delivered, preferably by pressing, shaking and/or vibration.

2. Method according to claim 1, wherein in the course of the third method step at least one reinforcement (91) is arranged in the form of a reinforcement mesh, preferably wherein
- the reinforcement mesh is manufactured from steel and/or plastic, and/or
- the reinforcement mesh is welded together from individual rods and/or at least one lattice girder, and/or
- comprises fiber rods.

3. Method according to claim 1 or 2, wherein in the course of the third method step at least one reinforcement (91) is arranged in the form of fibers, preferably glass fibers.

4. Method according to one of claims 1 to 3, wherein in the course of the third method step at least one reinforcement (91) is arranged in the form of at least one individual rod, preferably provided by means of at least one straightening machine (88).

5. Method according to one of claims 1 to 4, wherein the at least one reinforcement (91) is produced in a further method step, which is effected before the third method step, in at least one reinforcement welding device (89), which is preferably formed as a mesh welding system and/or as a lattice girder welding system, preferably wherein the production is effected when needed and/or CAD-controlled and/or with a batch size of 1.

6. Method according to one of claims 1 to 5, wherein the first and second method steps are repeated at least once after the third method step, and/or the first and second method steps are carried out in reverse order.

7. Method according to one of claims 1 to 6, wherein in the course of the second method step at least one water-binder mixture (2), comprising water and at least one hydraulic binder, in particular a cement-based binder, is delivered, and wherein the dose of the at least one water-binder mixture (2) delivered is large enough that a liquefaction at least in regions is achieved at the at least one locally predetermined region (33) of the at least one layer (34, 35, 36) of the at least one aggregate (31).

8. Method according to one of claims 1 to 7, wherein in the course of the third method step the at least one reinforcement (91) is arranged such that the at least one reinforcement (91) has a lateral protrusion (95) beyond a side of the at least one layer (34, 35, 36) of the at least one particulate aggregate (31).

9. Method according to one of claims 1 to 8, wherein in a further method step unbound particulate aggregate (31) is removed, preferably extracted, at least in one region.

10. Method according to claim 9, wherein in a further method step at least one insulation material (70) is deposited by means of at least one further layer depositing device (30) in the region in which the unbound particulate aggregate (31) was removed.

11. Method according to one of claims 1 to 10, wherein
- a predetermined dose (49) of the at least one water-binder mixture (2) is delivered at at least one locally predetermined region (33) of the printing platform (32) before a first layer (34) of the at least one aggregate (31) has been deposited on the production pallet (32), and/or
- a predetermined dose (49) of the water-binder mixture (2) is delivered at at least one locally predetermined region (33) of the last layer (36) of the at least one aggregate (31) after a last layer (36) of the at least one aggregate (31) has been deposited.

12. Method according to one of claims 1 to 11, wherein prefabricated parts in the form of wall elements for buildings are produced by means of the method.

## Revendications

1. Procédé de fabrication d'une pièce préfabriquée par impression 3D, de préférence d'un élément de construction préfabriqué en béton (54), pour le secteur de la construction, comprenant les étapes de procédé suivantes :
- dans une première étape de procédé, au moins une couche (34, 35, 36) d'au moins un granulat (31) sous forme de particules est déposée sur une palette de production (32) au moyen d'au moins un dispositif de dépôt de couche (30),
- dans une deuxième étape de procédé, une dose (49) prédéfinie d'au moins un liant ou d'au moins un mélange d'eau et de liant (2), comprenant de l'eau et au moins un liant hydraulique, en particulier un liant cimentaire, est délivrée au moyen d'au moins une tête d'impression (1) sur au moins une zone (33) localement prédéfinie de l'au moins une couche (34, 35, 36) de l'au moins un granulat (31),
- dans une troisième étape de procédé, au moins une armature (91) est disposée au moyen d'au moins un dispositif de dépôt d'armature (90) au moins par endroits sur et/ou dans l'au moins une zone (33) localement prédéfinie, sur laquelle la dose (49) prédéfinie de l'au moins un liant ou de l'au moins un mélange d'eau et de liant (2) a été délivrée dans le cadre de la deuxième étape de procédé, **caractérisé en ce que**
l'armature (91) est enfoncée, dans le cadre de la troisième étape de procédé, au moins par endroits dans la zone (33) localement prédéfinie de l'au moins une couche (34, 35, 36) de l'au moins un granulat (31) sous forme de particules, dans laquelle la dose (49) prédéfinie de l'au moins un liant ou de l'au moins un mélange d'eau et de liant (2) a été délivrée, de préférence par pression, agitation et/ou vibration.

2. Procédé selon la revendication 1, dans lequel, dans le cadre de la troisième étape de procédé, au moins une armature (91) est disposée sous la forme d'un tapis d'armature, de préférence dans lequel
- le tapis d'armature est fabriqué à partir d'acier et/ou de matière plastique, et/ou
- le tapis d'armature est assemblé par soudage à partir de barres individuelles et/ou à au moins un support de grillage, et/ou
- comprend des barres de fibres.

3. Procédé selon la revendication 1 ou 2, dans lequel, dans le cadre de la troisième étape de procédé, au moins une armature (91) est disposée sous la forme de fibres, de préférence de fibres de verre.

4. Procédé selon l'une quelconque des revendications 1 à 3, dans lequel, dans le cadre de la troisième étape de procédé, au moins une armature (91) est disposée sous la forme d'au moins une barre individuelle fournie de préférence au moins d'au moins une machine à dresser (88).

5. Procédé selon l'une quelconque des revendications 1 à 4, dans lequel l'au moins une armature (91) est produite dans une autre étape de procédé, qui est effectuée chronologiquement avant la troisième étape de procédé, dans au moins un dispositif de soudage d'armature (89), lequel est réalisé de préférence en tant qu'installation de soudage de tapis et/ou en tant qu'installation de soudage de support de grillage, de préférence dans lequel la production est effectuée de manière synchrone selon les besoins et/ou de manière commandée par CAO et/ou avec une taille de lots 1.

6. Procédé selon l'une quelconque des revendications 1 à 5, dans lequel la première et la deuxième étape de procédé sont répétées au moins une fois après la troisième étape de procédé, et/ou la première et la deuxième étape de procédé sont mises en œuvre dans un ordre inversé.

7. Procédé selon l'une quelconque des revendications 1 à 6, dans lequel dans le cadre de la deuxième étape de procédé, au moins un mélange d'eau et de liant (2), comprenant de l'eau et au moins un liant hydraulique, en particulier un liant cimentaire, est délivré, et dans lequel la dose de l'au moins un mélange d'eau et de liant (2) délivré est si importante qu'une liquéfaction au moins par endroits est obtenue sur l'au moins une zone (33) localement prédéfinie de l'au moins une couche (34, 35, 36) de l'au moins un granulat (31).

8. Procédé selon l'une quelconque des revendications 1 à 7, dans lequel l'au moins une armature (91) est disposée dans le cadre de la troisième étape de procédé de telle manière que l'au moins une armature (91) présente un débord latéral (95) au-dessus d'un côté de l'au moins une couche (34, 35, 36) de l'au moins un granulat (31) sous forme de particules.

9. Procédé selon l'une quelconque des revendications 1 à 8, dans lequel dans une autre étape de procédé, un granulat (31) sous forme de particules non lié est retiré, de préférence est aspiré, au moins dans une zone.

10. Procédé selon la revendication 9, dans lequel dans une autre étape de procédé, au moins un matériau isolant (70) est déposé au moyen d'au moins un autre dispositif de dépôt de couche (30) dans cette zone, dans laquelle précisément le granulat (31) sous forme de particules non lié a été retiré.

11. Procédé selon l'une quelconque des revendications 1 à 10, dans lequel
- avant le dépôt d'une première couche (34) de l'au moins un granulat (31) sur la palette de production (32), une dose (49) prédéfinie de l'au moins un mélange d'eau et de liant (2) est délivrée sur au moins une zone (33) localement prédéfinie de la plateforme d'impression (32), et/ou
- après le dépôt d'une dernière couche (36) de l'au moins un granulat (31), une dose (49) prédéfinie du mélange d'eau et de liant (2) est délivrée sur au moins une zone (33) localement prédéfinie de la dernière couche (36) de l'au moins un granulat (31).

12. Procédé selon l'une quelconque des revendications 1 à 11, dans lequel des pièces préfabriquées sont fabriquées sous la forme d'éléments de paroi pour des bâtiments au moyen du procédé.
